(19) Europäisches Patentamt
European Patent Office
Office européen des brevets

(11) **EP 4 583 507 A1**

(12) **EUROPEAN PATENT APPLICATION**
published in accordance with Art. 153(4) EPC

(43) Date of publication:
**09.07.2025 Bulletin 2025/28**

(21) Application number: **23884924.4**

(22) Date of filing: **31.10.2023**

(51) International Patent Classification (IPC):
*H04N 19/107* (2014.01)

(52) Cooperative Patent Classification (CPC):
**H04L 65/60; H04L 65/80; H04N 19/107;
H04N 19/124; H04N 19/146; H04N 19/176;
H04N 19/52**

(86) International application number:
**PCT/CN2023/128410**

(87) International publication number:
**WO 2024/093994 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 CN 202211373846**

(71) Applicant: **Huawei Technologies Co., Ltd.
Shenzhen, Guangdong 518129 (CN)**

(72) Inventors:
• **WANG, Danni**
  **Shenzhen, Guangdong 518129 (CN)**
• **YANG, Haitao**
  **Shenzhen, Guangdong 518129 (CN)**
• **LUO, Yi**
  **Shenzhen, Guangdong 518129 (CN)**
• **FENG, Junkai**
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **ENCODING AND DECODING METHOD AND APPARATUS**

(57)     Embodiments of this application relate to the field of media technologies, and disclose an encoding and decoding method and apparatus, to improve picture quality of a picture obtained through decoding. The method includes: first obtaining a to-be-encoded picture block, then determining encoding complexity of the to-be-encoded picture block based on a plurality of prediction modes, next determining a quantization parameter of the to-be-encoded picture block based on the encoding complexity, and after that encoding the to-be-encoded picture block based on the quantization parameter to generate a bitstream. The plurality of prediction modes include at least one of block-level prediction, point-level prediction, and intra block copy prediction, and the encoding complexity indicates encoding difficulty of the to-be-encoded picture block.

FIG. 7

## Description

This application claims priority to Chinese Patent Application No. 202211373846.0, filed with the China National Intellectual Property Administration on November 4, 2022 and entitled "ENCODING AND DECODING METHOD AND APPARATUS", which is incorporated herein by reference in its entirety.

## TECHNICAL FIELD

Embodiments of this application relate to the field of media technologies, and in particular, to an encoding and decoding method and apparatus.

## BACKGROUND

A media device uses a display interface when transmitting media content. When being transmitted, the media content may be compressed by the display interface through an encoding operation, to reduce a bandwidth in a media content transmission process. After receiving compressed media content, a receiving end needs to decode the compressed media content through a decoding operation, to restore the media content.

An output bit rate may be adjusted through bit rate control during encoding. Different bit rate control measures greatly affect quality of decoded pictures.

Therefore, how to improve bit rate control effect during encoding to improve the picture quality of pictures obtained through decoding is one of problems to be urgently resolved by persons skilled in the art.

## SUMMARY

Embodiments of this application provide an encoding and decoding method and apparatus, to improve picture quality of a picture obtained through decoding. To achieve the foregoing objectives, the following technical solutions are used in embodiments of this application.

According to a first aspect, an embodiment of this application provides an encoding method. The method includes: first obtaining a to-be-encoded picture block, then determining encoding complexity of the to-be-encoded picture block based on a plurality of prediction modes, next determining a quantization parameter of the to-be-encoded picture block based on the encoding complexity, and after that encoding the to-be-encoded picture block based on the quantization parameter to generate a bitstream. The plurality of prediction modes include at least one of block-level prediction, point-level prediction, and intra block copy prediction, and the encoding complexity indicates encoding difficulty of the to-be-encoded picture block.

It should be noted that the quantization parameter used in an encoding process directly affects picture quality of a picture obtained through decoding. The quantization parameter is adjusted based on the encoding complexity of the picture, so that the picture quality of the picture obtained through decoding can be improved. However, in a related technology, encoding complexity of a picture is calculated based on horizontal and vertical gradients of the picture. For a weak directional prediction mode, a gradient calculation result is far different from a prediction difference of the weak directional prediction mode. In this case, encoding complexity calculated based on the gradients is far different from actual encoding complexity of an actual current coding block (picture block) in an optimal prediction mode. As a result, a derived quantization parameter is inaccurate, and the picture quality is affected. However, in this embodiment of this application, the encoding complexity of the to-be-encoded picture block is determined based on the plurality of prediction modes. Regardless of whether the optimal prediction mode of the current picture block is a strong directional prediction mode or the weak directional prediction mode, the encoding complexity of the picture block can be accurately obtained based on prediction effect of the plurality of prediction modes, thereby improving accuracy of the encoding complexity of the picture block. Improving the accuracy of the encoding complexity can make the quantization parameter obtained based on the encoding complexity more accurate. Because accuracy of the quantization parameter is positively correlated with the picture quality of the picture obtained through decoding, improved accuracy of the quantization parameter correspondingly enhances the picture quality of the picture obtained through decoding.

In a possible implementation, a prediction operation may be performed on the to-be-encoded picture block based on the plurality of prediction modes to obtain a prediction residual that is of the to-be-encoded picture block and that corresponds to each prediction mode. Then, a target parameter that is of the to-be-encoded picture block and that corresponds to each prediction mode is determined based on the prediction residual, where the target parameter includes at least one of a sum of absolute differences, a sum of absolute transformed differences, or a quantity of lossless coding bits. Next, the encoding complexity of the to-be-encoded picture block is determined based on the target parameter.

It can be learned that, according to the method provided in this embodiment of this application, the prediction operation may be performed on the to-be-encoded picture block based on the plurality of prediction modes to obtain a sum of absolute differences, a sum of absolute transformed differences, or a quantity of lossless coding bits that is of the to-be-encoded picture block and that corresponds to each prediction mode. Then, the encoding complexity of the to-be-encoded picture block is determined based on the information. Regardless of whether the optimal prediction mode of the current picture block is the strong directional prediction mode or the weak directional prediction mode, the encoding complexity of the picture block can be accurately obtained based on the prediction effect of the plurality of prediction modes, thereby improving the accuracy of the encoding complexity of the picture block. Improving the accuracy of the encoding complexity can make the quantization parameter obtained based on the encoding complexity more accurate. Because the accuracy of the quantization parameter is positively correlated with the picture quality of the picture obtained through decoding, the improved accuracy of the quantization parameter correspondingly enhances the picture quality of the picture obtained through decoding.

In a possible implementation, first encoding complexity of the to-be-encoded picture block may be determined based on the target parameter. The to-be-encoded picture block is divided into a plurality of sub-blocks. A horizontal difference block and a vertical difference block of each of the plurality of sub-blocks are determined. Second encoding complexity of the to-be-encoded picture block is determined based on the horizontal difference block and the vertical difference block of each sub-block. The encoding complexity of the to-be-encoded picture block is determined based on the first encoding complexity and the second encoding complexity.

It can be learned that, according to the method provided in this embodiment of this application, the encoding complexity of the picture may be calculated based on the plurality of prediction modes and the horizontal and vertical gradients of the picture. Compared with calculating the encoding complexity of the picture based only on the horizontal and vertical gradients of the picture, in the weak directional prediction mode, the accuracy of the encoding complexity of the picture block can be improved, so that the quantization parameter obtained based on the encoding complexity can be more accurate. Because the accuracy of the quantization parameter is positively correlated with the picture quality of the picture obtained through decoding, the improved accuracy of the quantization parameter correspondingly enhances the picture quality of the picture obtained through decoding.

In another possible implementation, the encoding complexity of the to-be-encoded picture block may be determined based on a target absolute difference, a target sum of absolute transformed differences, or a target quantity of lossless coding bits. The target absolute difference is a smallest absolute difference in absolute differences that are of the to-be-encoded picture block and that correspond to all prediction modes. The sum of absolute transformed differences is a smallest sum of absolute transformed differences in sums of absolute transformed differences that are of the to-be-encoded picture block and that correspond to all prediction modes. The target quantity of lossless coding bits is a smallest quantity of lossless coding bits in quantities of lossless coding bits that are of the to-be-encoded picture block and that correspond to all prediction modes.

It can be learned that, in this embodiment of this application, the target absolute difference, the target sum of absolute transformed differences, or the target quantity of lossless coding bits are determined based on the plurality of prediction modes. Then, the encoding complexity of the to-be-encoded picture block is determined based on the target absolute difference, the target sum of absolute transformed differences, or the target quantity of lossless coding bits. Regardless of whether the optimal prediction mode of the current picture block is the strong directional prediction mode or the weak directional prediction mode, the encoding complexity of the picture block can be accurately obtained based on the prediction effect of the plurality of prediction modes, thereby improving the accuracy of the encoding complexity of the picture block. Improving the accuracy of the encoding complexity can make the quantization parameter obtained based on the encoding complexity more accurate. Because the accuracy of the quantization parameter is positively correlated with the picture quality of the picture obtained through decoding, the improved accuracy of the quantization parameter correspondingly enhances the picture quality of the picture obtained through decoding.

In another possible implementation, the to-be-encoded picture block may be divided into a plurality of sub-blocks. A prediction operation is performed on the plurality of sub-blocks based on the plurality of prediction modes to obtain a prediction residual that is of each sub-block and that corresponds to each prediction mode. A target parameter that is of each sub-block and that corresponds to each prediction mode is determined based on the prediction residual, where the target parameter includes at least one of a sum of absolute differences, a sum of absolute transformed differences, or a quantity of lossless coding bits. The encoding complexity of the to-be-encoded picture block is determined based on the target parameter.

It can be learned that, according to the method provided in this embodiment of this application, the prediction operation may be performed on the sub-blocks of the to-be-encoded picture block based on the plurality of prediction modes to obtain a sum of absolute differences, a sum of absolute transformed differences, or a quantity of lossless coding bits that is of each sub-block of the to-be-encoded picture block and that corresponds to each prediction mode. Then, the encoding complexity of the to-be-encoded picture block is determined based on the information. Regardless of whether the optimal prediction mode of the current picture block is the strong directional prediction mode or the weak directional prediction mode, the encoding complexity of the picture block can be accurately obtained based on the prediction effect of the plurality of prediction modes, thereby improving the accuracy of the encoding complexity of the picture block. Improving the accuracy of the encoding complexity can make the quantization parameter obtained based on the encoding complexity more accurate. Because the accuracy of the quantization parameter is positively correlated with the picture quality of the picture obtained through decoding, the improved accuracy of the quantization parameter correspondingly enhances the picture quality of the picture obtained through decoding. In addition, compared with performing the prediction operation on the to-be-encoded picture block based on the plurality of prediction modes, performing, after dividing the to-be-encoded picture block into a plurality of sub-blocks, the prediction operation on the plurality of sub-blocks of the to-be-encoded picture block based on the plurality of prediction modes can further improve the accuracy of the obtained encoding complexity.

In a possible implementation, encoding complexity of each sub-block may be determined based on the target parameter. The encoding complexity of the to-be-encoded picture block is determined based on the encoding complexity of each sub-block.

It can be learned that, according to the method provided in this embodiment of this application, the prediction operation may be performed on the plurality of sub-blocks of the to-be-encoded picture block based on the plurality of prediction modes to obtain encoding complexity of each sub-block of the to-be-encoded picture block. Then, the encoding complexity of the to-be-encoded picture block is calculated based on the encoding complexity of each sub-block of the to-be-encoded picture block. Regardless of whether the optimal prediction mode of the current picture block is the strong directional prediction mode or the weak directional prediction mode, the encoding complexity of the picture block can be accurately obtained based on the prediction effect of the plurality of prediction modes, thereby improving the accuracy of the encoding complexity of the picture block. Improving the accuracy of the encoding complexity can make the quantization parameter obtained based on the encoding complexity more accurate. Because the accuracy of the quantization parameter is positively correlated with the picture quality of the picture obtained through decoding, the improved accuracy of the quantization parameter correspondingly enhances the picture quality of the picture obtained through decoding.

In a possible implementation, first encoding complexity of the to-be-encoded picture block may be determined based on the target parameter. A horizontal difference block and a vertical difference block of each of the plurality of sub-blocks are determined. Second encoding complexity of the to-be-encoded picture block is determined based on the horizontal difference block and the vertical difference block of each sub-block. The encoding complexity of the to-be-encoded picture block is determined based on the first encoding complexity and the second encoding complexity.

It can be learned that, according to the method provided in this embodiment of this application, the encoding complexity of the picture may be calculated based on the plurality of prediction modes and the horizontal and vertical gradients of the picture. Compared with calculating the encoding complexity of the picture based only on the horizontal and vertical gradients of the picture, in the weak directional prediction mode, the accuracy of the encoding complexity of the picture block can be improved, so that the quantization parameter obtained based on the encoding complexity can be more accurate. Because the accuracy of the quantization parameter is positively correlated with the picture quality of the picture obtained through decoding, the improved accuracy of the quantization parameter correspondingly enhances the picture quality of the picture obtained through decoding.

In a possible implementation, the encoding complexity may be encoded into the bitstream.

It can be learned that, in this embodiment of this application, the encoding complexity of the to-be-encoded picture block determined based on the plurality of prediction modes may be encoded into the bitstream, so that a decoder side decodes the bitstream based on the encoding complexity in the bitstream to obtain a decoded picture. Regardless of whether the optimal prediction mode of the current picture block is the strong directional prediction mode or the weak directional prediction mode, the encoding complexity of the picture block can be accurately obtained based on the prediction effect of the plurality of prediction modes, thereby improving the accuracy of the encoding complexity of the picture block. Improving the accuracy of the encoding complexity can make the quantization parameter obtained based on the encoding complexity more accurate. Because the accuracy of the quantization parameter is positively correlated with the picture quality of the picture obtained through decoding, the improved accuracy of the quantization parameter correspondingly enhances the picture quality of the picture obtained through decoding.

According to a second aspect, an embodiment of this application further provides a decoding method. The method includes: obtaining encoding complexity of a to-be-encoded picture block, where the encoding complexity indicates encoding difficulty of the to-be-encoded picture block, the encoding complexity is determined by a plurality of prediction modes, and the plurality of prediction modes include at least one of block-level prediction, point-level prediction, and intra block copy prediction; determining a quantization parameter of the to-be-encoded picture block based on the encoding complexity; and decoding a bitstream based on the quantization parameter to obtain a decoded picture block, where the bitstream is generated by encoding the to-be-encoded picture block, and the decoded picture block is a reconstructed to-be-encoded picture block.

It should be noted that the quantization parameter used in an encoding process directly affects picture quality of a picture obtained through decoding. The quantization parameter is adjusted based on the encoding complexity of the picture, so that the picture quality of the picture obtained through decoding can be improved. However, in a related technology, encoding complexity of a picture is calculated based on horizontal and vertical gradients of the picture. For a weak directional prediction mode, a gradient calculation result is far different from a prediction difference of the weak directional prediction mode. In this case, encoding complexity calculated based on the gradients is far different from actual encoding complexity of an actual current coding block (picture block) in an optimal prediction mode. As a result, a derived quantization parameter is inaccurate, and the picture quality is affected. However, in this embodiment of this application, the encoding complexity of the to-be-encoded picture block is determined based on the plurality of prediction modes. Regardless of whether the optimal prediction mode of the current picture block is a strong directional prediction mode or the weak directional prediction mode, the encoding complexity of the picture block can be accurately obtained based on prediction effect of the plurality of prediction modes, thereby improving accuracy of the encoding complexity of the picture block. Improving the accuracy of the encoding complexity can make the quantization parameter obtained based on the encoding complexity more accurate. Because accuracy of the quantization parameter is positively correlated with the picture quality of the picture obtained through decoding, improved accuracy of the quantization parameter correspondingly enhances the picture quality of the picture obtained through decoding.

In a possible implementation, entropy decoding can be performed on the bitstream to obtain the encoding complexity.

In a possible implementation, a prediction operation may be performed on the to-be-encoded picture block based on the plurality of prediction modes to obtain a prediction residual that is of the to-be-encoded picture block and that corresponds to each prediction mode. A target parameter that is of the to-be-encoded picture block and that corresponds to each prediction mode is determined based on the prediction residual, where the target parameter includes at least one of a sum of absolute differences, a sum of absolute transformed differences, or a quantity of lossless coding bits. The encoding complexity of the to-be-encoded picture block is determined based on the target parameter.

In a possible implementation, first encoding complexity of the to-be-encoded picture block is determined based on the target parameter. The to-be-encoded picture block is divided into a plurality of sub-blocks. A horizontal difference block and a vertical difference block of each of the plurality of sub-blocks are determined. Second encoding complexity of the to-be-encoded picture block is determined based on the horizontal difference block and the vertical difference block of each sub-block. The encoding complexity of the to-be-encoded picture block is determined based on the first encoding complexity and the second encoding complexity.

In a possible implementation, the encoding complexity of the to-be-encoded picture block is determined based on a target absolute difference, a target sum of absolute transformed differences, or a target quantity of lossless coding bits. The target absolute difference is a smallest absolute difference in absolute differences that are of the to-be-encoded picture block and that correspond to all prediction modes. The sum of absolute transformed differences is a smallest sum of absolute transformed differences in sums of absolute transformed differences that are of the to-be-encoded picture block and that correspond to all prediction modes. The target quantity of lossless coding bits is a smallest quantity of lossless coding bits in quantities of lossless coding bits that are of the to-be-encoded picture block and that correspond to all prediction modes.

In a possible implementation, the to-be-encoded picture block is divided into a plurality of sub-blocks. A prediction operation is performed on the plurality of sub-blocks based on the plurality of prediction modes to obtain a prediction residual that is of each sub-block and that corresponds to each prediction mode. A target parameter that is of each sub-block and that corresponds to each prediction mode is determined based on the prediction residual, where the target parameter includes at least one of a sum of absolute differences, a sum of absolute transformed differences, or a quantity of lossless coding bits. The encoding complexity of the to-be-encoded picture block is determined based on the target parameter.

In a possible implementation, encoding complexity of each sub-block is determined based on the target parameter. The encoding complexity of the to-be-encoded picture block is determined based on the encoding complexity of each sub-block.

In a possible implementation, first encoding complexity of the to-be-encoded picture block is determined based on the target parameter. A horizontal difference block and a vertical difference block of each of the plurality of sub-blocks are determined. Second encoding complexity of the to-be-encoded picture block is determined based on the horizontal difference block and the vertical difference block of each sub-block. The encoding complexity of the to-be-encoded picture block is determined based on the first encoding complexity and the second encoding complexity.

According to a third aspect, an embodiment of this application further provides an encoding apparatus. The apparatus includes an obtaining unit, a first determining unit, a second determining unit, and an encoding unit. The obtaining unit is configured to obtain a to-be-encoded picture block. The first determining unit is configured to determine encoding complexity of the to-be-encoded picture block based on a plurality of prediction modes, where the plurality of prediction modes include at least one of block-level prediction, point-level prediction, and intra block copy prediction, and the encoding complexity indicates encoding difficulty of the to-be-encoded picture block. The second determining unit is configured to determine a quantization parameter of the to-be-encoded picture block based on the encoding complexity. The encoding unit is configured to encode the to-be-encoded picture block based on the quantization parameter to generate a bitstream.

In a possible implementation, the first determining unit is specifically configured to: perform a prediction operation on the to-be-encoded picture block based on the plurality of prediction modes to obtain a prediction residual that is of the to-be-encoded picture block and that corresponds to each prediction mode; determine, based on the prediction residual, a target parameter that is of the to-be-encoded picture block and that corresponds to each prediction mode, where the target parameter includes at least one of a sum of absolute differences, a sum of absolute transformed differences, or a quantity of lossless coding bits; and determine the encoding complexity of the to-be-encoded picture block based on the target parameter.

In a possible implementation, the first determining unit is specifically configured to: determine first encoding complexity of the to-be-encoded picture block based on the target parameter; divide the to-be-encoded picture block into a plurality of sub-blocks; determine a horizontal difference block and a vertical difference block of each of the plurality of sub-blocks; determine second encoding complexity of the to-be-encoded picture block based on the horizontal difference block and the vertical difference block of each sub-block; and determine the encoding complexity of the to-be-encoded picture block based on the first encoding complexity and the second encoding complexity.

In a possible implementation, the first determining unit is specifically configured to determine the encoding complexity of the to-be-encoded picture block based on a target absolute difference, a target sum of absolute transformed differences, or a target quantity of lossless coding bits. The target absolute difference is a smallest absolute difference in absolute differences that are of the to-be-encoded picture block and that correspond to all prediction modes. The sum of absolute transformed differences is a smallest sum of absolute transformed differences in sums of absolute transformed differences that are of the to-be-encoded picture block and that correspond to all prediction modes. The target quantity of lossless coding bits is a smallest quantity of lossless coding bits in quantities of lossless coding bits that are of the to-be-encoded picture block and that correspond to all prediction modes.

In a possible implementation, the first determining unit is specifically configured to: divide the to-be-encoded picture block into a plurality of sub-blocks; perform a prediction operation on the plurality of sub-blocks based on the plurality of prediction modes to obtain a prediction residual that is of each sub-block and that corresponds to each prediction mode; determine, based on the prediction residual, a target parameter that is of each sub-block and that corresponds to each prediction mode, where the target parameter includes at least one of a sum of absolute differences, a sum of absolute transformed differences, or a quantity of lossless coding bits; and determine the encoding complexity of the to-be-encoded picture block based on the target parameter.

In a possible implementation, the first determining unit is specifically configured to: determine encoding complexity of each sub-block based on the target parameter; and determine the encoding complexity of the to-be-encoded picture block based on the encoding complexity of each sub-block.

In a possible implementation, the first determining unit is specifically configured to: determine first encoding complexity of the to-be-encoded picture block based on the target parameter; determine a horizontal difference block and a vertical difference block of each of the plurality of sub-blocks; determine second encoding complexity of the to-be-encoded picture block based on the horizontal difference block and the vertical difference block of each sub-block; and determine the encoding complexity of the to-be-encoded picture block based on the first encoding complexity and the second encoding complexity.

In a possible implementation, the encoding unit is further configured to encode the encoding complexity into the bitstream.

According to a fourth aspect, an embodiment of this application further provides a decoding apparatus. The apparatus includes an obtaining unit, a determining unit, and a decoding unit. The obtaining unit is configured to obtain encoding complexity of a to-be-encoded picture block, where the encoding complexity indicates encoding difficulty of the to-be-encoded picture block, the encoding complexity is determined by a plurality of prediction modes, and the plurality of prediction modes include at least one of block-level prediction, point-level prediction, and intra block copy prediction. The determining unit is configured to determine a quantization parameter of the to-be-encoded picture block based on the encoding complexity. The decoding unit is configured to decode a bitstream based on the quantization parameter to obtain a decoded picture block, where the bitstream is generated by encoding the to-be-encoded picture block, and the decoded picture block is a reconstructed to-be-encoded picture block.

In a possible implementation, the obtaining unit is specifically configured to perform entropy decoding on the bitstream to obtain the encoding complexity.

In a possible implementation, the obtaining unit is specifically configured to: perform a prediction operation on the to-be-encoded picture block based on the plurality of prediction modes to obtain a prediction residual that is of the to-be-encoded picture block and that corresponds to each prediction mode; determine, based on the prediction residual, a target parameter that is of the to-be-encoded picture block and that corresponds to each prediction mode, where the target parameter includes at least one of a sum of absolute differences, a sum of absolute transformed differences, or a quantity of lossless coding bits; and determine the encoding complexity of the to-be-encoded picture block based on the target parameter.

In a possible implementation, the obtaining unit is specifically configured to: determine first encoding complexity of the to-be-encoded picture block based on the target parameter; divide the to-be-encoded picture block into a plurality of sub-blocks; determine a horizontal difference block and a vertical difference block of each of the plurality of sub-blocks; determine second encoding complexity of the to-be-encoded picture block based on the horizontal difference block and the vertical difference block of each sub-block; and determine the encoding complexity of the to-be-encoded picture block based on the first encoding complexity and the second encoding complexity.

In a possible implementation, the obtaining unit is specifically configured to determine the encoding complexity of the to-be-encoded picture block based on a target absolute difference, a target sum of absolute transformed differences, or a target quantity of lossless coding bits. The target absolute difference is a smallest absolute difference in absolute differences that are of the to-be-encoded picture block and that correspond to all prediction modes. The sum of absolute transformed differences is a smallest sum of absolute transformed differences in sums of absolute transformed differences that are of the to-be-encoded picture block and that correspond to all prediction modes. The target quantity of lossless coding bits is a smallest quantity of lossless coding bits in quantities of lossless coding bits that are of the to-be-encoded picture block and that correspond to all prediction modes.

In a possible implementation, the obtaining unit is specifically configured to: divide the to-be-encoded picture block into a plurality of sub-blocks; perform a prediction operation on the plurality of sub-blocks based on the plurality of prediction modes to obtain a prediction residual that is of each sub-block and that corresponds to each prediction mode; determine, based on the prediction residual, a target parameter that is of each sub-block and that corresponds to each prediction mode, where the target parameter includes at least one of a sum of absolute differences, a sum of absolute transformed differences, or a quantity of lossless coding bits; and determine the encoding complexity of the to-be-encoded picture block based on the target parameter.

In a possible implementation, the obtaining unit is specifically configured to: determine encoding complexity of each sub-block based on the target parameter; and determine the encoding complexity of the to-be-encoded picture block based on the encoding complexity of each sub-block.

In a possible implementation, the obtaining unit is specifically configured to: determine first encoding complexity of the to-be-encoded picture block based on the target parameter; determine a horizontal difference block and a vertical difference block of each of the plurality of sub-blocks; determine second encoding complexity of the to-be-encoded picture block based on the horizontal difference block and the vertical difference block of each sub-block; and determine the encoding complexity of the to-be-encoded picture block based on the first encoding complexity and the second encoding complexity.

According to a fifth aspect, an embodiment of this application further provides an encoding apparatus. The apparatus includes at least one processor. When the at least one processor executes program code or instructions, the method in any one of the first aspect or the possible implementations of the first aspect is implemented.

Optionally, the apparatus may further include at least one memory, and the at least one memory is configured to store the program code or the instructions.

According to a sixth aspect, an embodiment of this application further provides a decoding apparatus. The apparatus includes at least one processor. When the at least one processor executes program code or instructions, the method in any one of the second aspect or the possible implementations of the second aspect is implemented.

Optionally, the apparatus may further include at least one memory, and the at least one memory is configured to store the program code or the instructions.

According to a seventh aspect, an embodiment of this application further provides a chip, including an input interface, an output interface, and at least one processor. Optionally, the chip further includes a memory. The at least one processor is configured to execute code in the memory. When the at least one processor executes the code, the chip implements the method in any one of the first aspect or the possible implementations of the first aspect.

Optionally, the chip may be an integrated circuit.

According to an eighth aspect, an embodiment of this application further provides a computer-readable storage medium, configured to store a computer program. The computer program is configured to implement the method in any one of the first aspect or the possible implementations of the first aspect.

According to a ninth aspect, an embodiment of this application further provides a computer program product including instructions. When the computer program product runs on a computer, the computer is enabled to implement the method in any one of the first aspect or the possible implementations of the first aspect.

The encoding apparatus, the decoding apparatus, the computer storage medium, the computer program product, and the chip provided in embodiments are all configured to perform the encoding method and the decoding method provided above. Therefore, for beneficial effect that can be achieved by the encoding apparatus, the decoding apparatus, the computer storage medium, the computer program product, and the chip, refer to the beneficial effect of the encoding method and the decoding method provided above. Details are not described herein again.

## BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some of embodiments of this application, and a person of ordinary skill in the art may still derive other accompanying drawings from these accompanying drawings without creative efforts.

FIG. 1a is an example block diagram of a coding system according to an embodiment of this application;
FIG. 1b is an example block diagram of a video coding system according to an embodiment of this application;
FIG. 2 is an example block diagram of a video encoder according to an embodiment of this application;
FIG. 3 is an example block diagram of a video decoder according to an embodiment of this application;
FIG. 4 is a diagram of an example of candidate picture blocks according to an embodiment of this application;
FIG. 5 is an example block diagram of a video coding device according to an embodiment of this application;
FIG. 6 is an example block diagram of an apparatus according to an embodiment of this application;
FIG. 7 is a diagram of an encoding method according to an embodiment of this application;
FIG. 8 is a schematic flowchart of determining encoding complexity according to an embodiment of this application;
FIG. 9 is another schematic flowchart of determining encoding complexity according to an embodiment of this application;
FIG. 10 is still another schematic flowchart of determining encoding complexity according to an embodiment of this application;
FIG. 11 is still another schematic flowchart of determining encoding complexity according to an embodiment of this application;
FIG. 12 is a diagram of a decoding method according to an embodiment of this application;
FIG. 13 is a diagram of an encoding apparatus according to an embodiment of this application;
FIG. 14 is a diagram of a decoding apparatus according to an embodiment of this application; and
FIG. 15 is a diagram of a structure of a chip according to an embodiment of this application.

## DESCRIPTION OF EMBODIMENTS

The following clearly and completely describes technical solutions of embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of embodiments of this application.

The term "and/or" in this specification describes only an association relationship for describing associated objects and represents that three relationships may exist. For example, A and/or B may represent the following three cases: Only A exists, both A and B exist, and only B exists.

In this specification and the accompanying drawings of embodiments of this application, the terms "first", "second", and the like are intended to distinguish between different objects or distinguish between different processing of a same object, but do not indicate a particular order of the objects.

In addition, the terms "including", "having", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

It should be noted that, in descriptions of embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In descriptions of embodiment of this application, unless otherwise stated, "a plurality of" means two or more.

First, the terms in embodiments of this application are explained.

Interface compression: A media device uses a display interface when transmitting a picture or a video. A picture or video bitstream that passes through the display interface indicates a binary stream generated by encoding picture or video content.

Slicing: An input picture may be sliced into one or more slices. Each slice is divided into one or more coding blocks for coding.

Bit rate control: In a process of adjusting an output bit rate during encoding, the output bit rate is adjusted by analyzing information such as current picture content and a bitstream buffer margin and by changing an encoding quantization parameter and an encoding mode. It is hereinafter referred to as ...

Quantization parameter (Quantization Parameter, QP): During encoding, a residual value generated by a prediction operation or a coefficient generated by a transform operation is quantized and then written into a bitstream. During decoding, a syntax element is dequantized to obtain the residual value or the coefficient. The QP is a parameter used in a quantization process. Generally, a larger QP value indicates a more obvious quantization degree. Adjusting the QP value directly affects a length of an encoded bitstream and quality of a decoded picture.

Constant bit rate (constant bit rate, CBR) strategy: The constant bit rate strategy is a strategy featured by consistent lengths of bitstreams output by an encoder in a unit period of time.

Intra block copy (Intra Block Copy, IBC) prediction mode: A current coding block may be divided into one or more sub-blocks, an optimal matched block is searched for for each sub-block in a search area according to a specific matching criterion, and the optimal matched block is a prediction block of a current sub-block, and a block vector is calculated. The block vector is a position vector of the current block and the optimal matched block.

Block-level prediction: A block is used as a prediction unit, and a reconstruction value in a current coding block cannot be used as a prediction operation of a prediction reference value of a subsequent point in the current block.

Point-level prediction: A point is used as a prediction unit, and a reconstruction value in a current coding block may be used as a prediction operation of a prediction reference value of a subsequent point in the current block.

Data encoding/decoding includes two parts: data encoding and data decoding. Data encoding is performed at a source side (or usually referred to as an encoder side), and usually includes processing (for example, compressing) raw data to reduce an amount of data required for representing the raw data (for more efficient storage and/or transmission). Data decoding is performed at a destination side (or usually referred to as a decoder side), and usually includes inverse processing relative to the encoder side to reconstruct raw data. "Coding" of data in embodiments of this application should be understood as "encoding" or "decoding" of the data. A combination of an encoding part and a decoding part is also referred to as a codec (encoding and decoding, CODEC).

In a case of lossless data coding, the raw data can be reconstructed. In other words, reconstructed raw data has same quality as the raw data (it is assumed that no transmission loss or other data loss occurs during storage or transmission). In a case of lossy data coding, further compression is performed through, for example, quantization, to reduce an amount of data required for representing the raw data, and the raw data cannot be fully reconstructed at the decoder side. In other words, quality of reconstructed raw data is lower or worse than quality of the raw data.

Embodiments of this application may be applied to video data, other data having a compression/decompression requirement, and the like. The following describes embodiments of this application by using coding of the video data (which is briefly referred to as video coding) as an example. For other types of data (for example, picture data, audio data, integer data, and other data having a compression/decompression requirement), refer to the following descriptions. Details are not described in embodiments of this application. It should be noted that, compared with video coding, in a process of coding data such as the audio data and the integer data, the data does not need to be partitioned into blocks, but the data may be directly coded.

Video coding typically refers to processing of a sequence of pictures, where the sequence of pictures forms a video or a video sequence. In the field of video coding, the terms "picture (picture)", "frame (frame)", and "image (image)" may be used as synonyms.

Several video coding standards are used for "lossy hybrid video coding" (that is, spatial prediction and temporal prediction in a pixel domain are combined with 2D transform coding for applying quantization in a transform domain). Each picture of a video sequence is typically partitioned into a set of non-overlapping blocks, and coding is typically performed at a block level. In other words, at the encoder side, a video is typically processed, that is, encoded, at a block (video block) level, for example, through spatial (intra) prediction and temporal (inter) prediction to generate a prediction block, subtracting the prediction block from a current block (block currently processed/to be processed) to obtain a residual block, and the residual block is transformed in the transform domain and quantized to reduce an amount of data to be transmitted (compressed); and at the decoder side, an inverse processing part relative to the encoder is applied to an encoded or compressed block to reconstruct the current block for representation. Furthermore, the encoder duplicates the decoder processing loop such that both generate identical predictions (for example, intra and inter predictions) and/or reconstructions for processing, that is, coding, subsequent blocks.

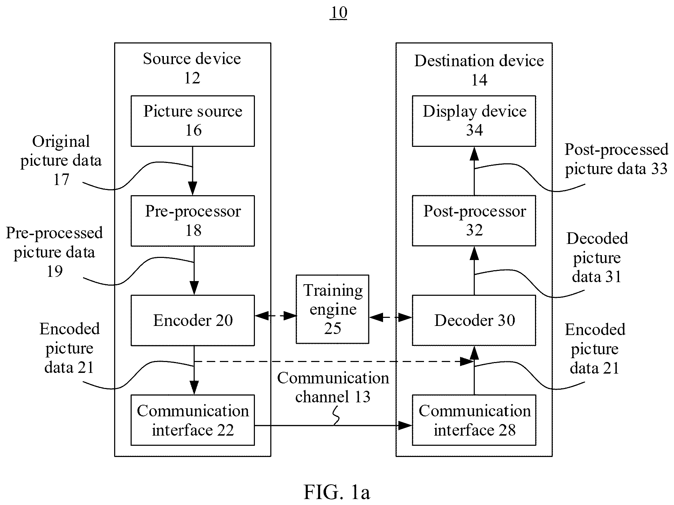

In the following embodiments of a coding system 10, an encoder 20 and a decoder 30 are described based on FIG. 1a to FIG. 3.

FIG. 1a is an example block diagram of a coding system 10 according to an embodiment of this application, for example, a video coding system 10 (also referred to as a coding system 10 for short) that may use a technology in embodiments of this application. A video encoder 20 (also referred to as an encoder 20 for short) and a video decoder 30 (also referred to as a decoder 30 for short) of the video coding system 10 represent devices that may be configured to perform technologies according to various examples described in embodiments of this application.

As shown in FIG. 1a, the coding system 10 includes a source device 12 configured to provide encoded picture data 21 such as encoded pictures to a destination device 14 for decoding the encoded picture data 21.

The source device 12 includes the encoder 20, and may additionally, that is, optionally, include a picture source 16, a pre-processor (or pre-processing unit) 18, for example, a picture pre-processor, and a communication interface (or communication unit) 22.

The picture source 16 may include or be any kind of picture capturing device for capturing a real-world picture or the like, and/or any type of a picture generating device, for example, a computer-graphics processor for generating a computer animated picture, or any kind of other device for obtaining and/or providing a real-world picture, a computer generated picture (for example, screen content, or a virtual reality (virtual reality, VR) picture) and/or any combination thereof (for example, an augmented reality (augmented reality, AR) picture). The picture source may be any type of memory or storage storing any of the aforementioned pictures.

To distinguish processing performed by the pre-processor (or pre-processing unit) 18, a picture (or picture data) 17 may also be referred to as an original picture (or original picture data) 17.

The pre-processor 18 is configured to receive the original picture data 17 and pre-process the original picture data 17, to obtain a pre-processed picture (or pre-processed picture data) 19. Pre-processing performed by the pre-processor 18 may, for example, include trimming, color format conversion (for example, from RGB to YCbCr), color correction, or de-noising. It may be understood that the pre-processing unit 18 may be an optional component.

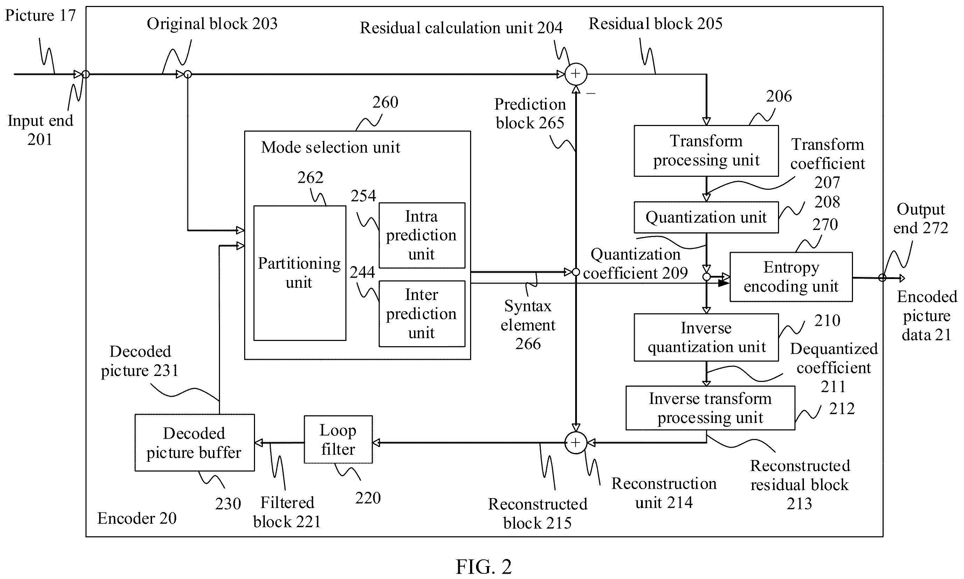

The video encoder (or encoder) 20 is configured to: receive the pre-processed picture data 19 and provide the encoded picture data 21 (further details will be described below, for example, based on FIG. 2).

A communication interface 22 of the source device 12 may be configured to: receive the encoded picture data 21 and send the encoded picture data 21 (or any further processed version thereof) through a communication channel 13 to another device, for example, the destination device 14 or any other device, for storage or direct reconstruction.

The destination device 14 includes the decoder 30, and may additionally, that is, optionally, include a communication interface (or communication unit) 28, a post-processor (or post-processing unit) 32, and a display device 34.

The communication interface 28 of the destination device 14 is configured to: directly receive the encoded picture data 21 (or any further processed version thereof) from the source device 12 or any other source device such as a storage device, and provide the encoded picture data 21 for the decoder 30. For example, the storage device is an encoded picture data storage device.

The communication interface 22 and the communication interface 28 may be configured to: transmit or receive the encoded picture data (or encoded data) 21 via a direct communication link between the source device 12 and the destination device 14, for example, a direct wired or wireless connection, or via any kind of network, for example, a wired or wireless network or any combination thereof, or any kind of private and public network, or any kind of combination thereof.

The communication interface 22 may be, for example, configured to package the encoded picture data 21 into an appropriate format, for example, packets, and/or process the encoded picture data using any kind of transmission encoding or processing for transmission over a communication link or communication network.

The communication interface 28, forming the counterpart of the communication interface 22, may be, for example, configured to: receive the transmitted data and process the transmission data using any type of corresponding transmission decoding or processing and/or de-packaging to obtain the encoded picture data 21.

Both the communication interface 22 and the communication interface 28 may be configured as unidirectional communication interfaces as indicated by an arrow for the communication channel 13 in FIG. 1a pointing from the source device 12 to the destination device 14, or bi-directional communication interfaces, and may be configured, for example, to send and receive messages, for example, to set up a connection, to acknowledge and exchange any other information related to the communication link and/or data transmission, for example, encoded picture data transmission.

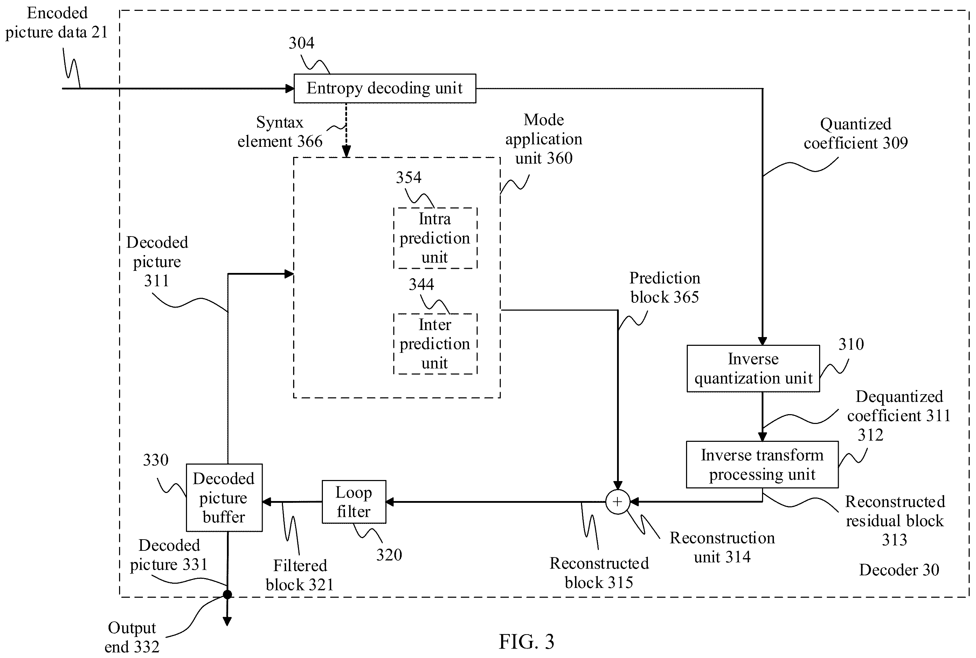

The video decoder (or decoder) 30 is configured to receive the encoded picture data 21 and provide decoded picture data (or decoded picture data) 31 (further details will be described below, for example, based on FIG. 3).

The post-processor 32 is configured to post-process the decoded picture data 31 (also referred to as reconstructed picture data), for example, the decoded picture, to obtain post-processed picture data 33, for example, a post-processed picture. Post-processing performed by the post-processing unit 32 may include, for example, color format conversion (for example, conversion from YCbCr to RGB), color correction, trimming, re-sampling, or any other processing for generating the decoded picture data 31 for display by, for example, the display device 34.

The display device 34 is configured to receive the post-processed picture data 33 for displaying the picture, for example, to a user or viewer. The display device 34 may be or include any type of display for representing the reconstructed picture, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS) display, a digital light processor (digital light processor, DLP), or any type of other display.

The coding system 10 further includes a training engine 25. The training engine 25 is configured to train the encoder 20 (especially an entropy encoding unit 270 in the encoder 20) or the decoder 30 (especially an entropy decoding unit 304 in the decoder 30), to perform entropy encoding on a to-be-encoded picture block based on estimated probability distribution obtained through estimation. For detailed descriptions of the training engine 25, refer to the following method embodiments.

Although FIG. 1a shows the source device 12 and the destination device 14 as separate devices, a device embodiment may alternatively include both the source device 12 and the destination device 14 or functions of both the source device 12 and the destination device 14, namely, the source device 12 or a corresponding function and the destination device 14 or a corresponding function. In these embodiments, the source device 12 or corresponding function and the destination device 14 or corresponding function may be implemented using the same hardware and/or software or by separate hardware and/or software or any combination thereof.

As will be apparent for the skilled person based on the description, the existence and (exact) division into the different units or functions in the source device 12 and/or the destination device 14 as shown in FIG. 1a may vary depending on an actual device and application.

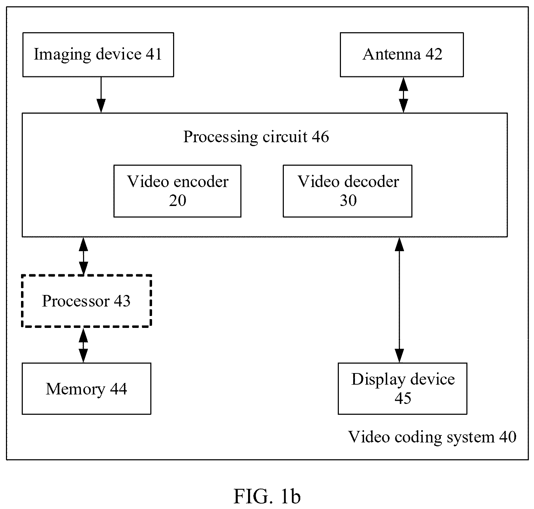

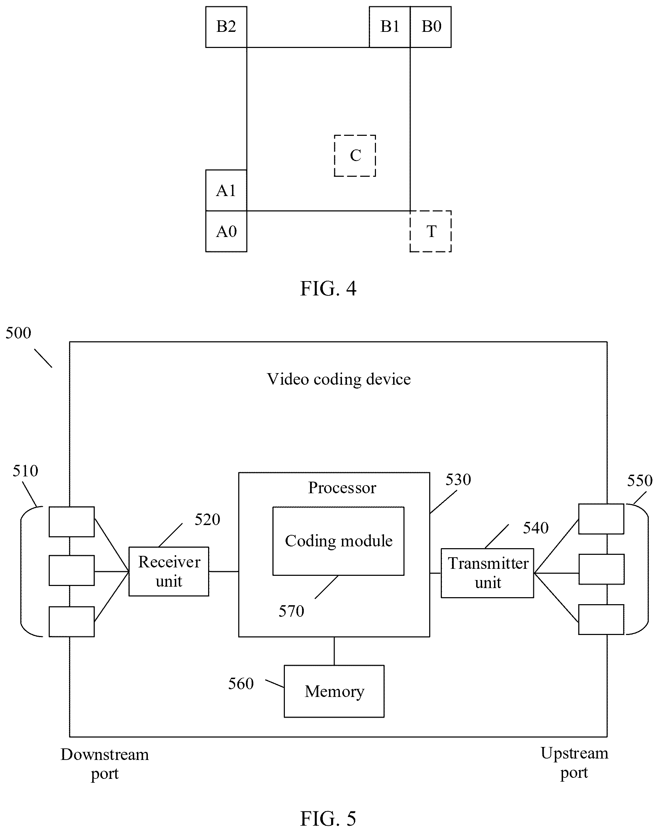

FIG. 1b is an example block diagram of a video coding system 40 according to an embodiment of this application. The encoder 20 (for example, the video encoder 20) or the decoder 30 (for example, the video decoder 30) or both the encoder 20 and the decoder 30 may be implemented by a processing circuit of the video coding system 40 shown in FIG. 1b, for example, one or more microprocessors, a digital signal processor (digital signal processor, DSP), an application-specific integrated circuit (application-specific integrated circuit, ASIC), a field-programmable gate array (field-programmable gate array, FPGA), discrete logic, hardware, a video coding dedicated processor or any combination thereof. Refer to FIG. 2 and FIG. 3. FIG. 2 is an example block diagram of a video encoder according to an embodiment of this application, and FIG. 3 is an example block diagram of a video decoder according to an embodiment of this application. The encoder 20 may be implemented by the processing circuit 46 to embody various modules discussed with reference to the encoder 20 in FIG. 2 and/or any other encoder system or subsystem described in this specification. The decoder 30 may be implemented by the processing circuit 46 to embody various modules discussed with reference to the decoder 30 in FIG. 3 and/or any other decoder system or subsystem described in this specification. The processing circuit 46 may be configured to perform the various operations as discussed later. As shown in FIG. 5, if the technologies are implemented partially in software, a device may store instructions for the software in a suitable non-transitory computer-readable storage medium and may execute the instructions in hardware using one or more processors to perform the technologies in embodiments of this application. Either of the video encoder 20 and the video decoder 30 may be integrated as a part of a combined encoder/decoder (encoder/decoder, CODEC) in a single device, for example, as shown in FIG. 1b.

The source device 12 and the destination device 14 may include any one of various devices, including any type of handheld or stationary devices, for example, notebook or laptop computers, mobile phones, smart phones, tablets or tablet computers, cameras, desktop computers, set-top boxes, televisions, display devices, digital media players, video gaming consoles, video streaming devices (such as content service servers or content delivery servers), a broadcast receiver device, a broadcast transmitter device, a monitor device, or the like and may use no or any type of operating system. The source device 12 and the destination device 14 may also be devices in a cloud computing scenario, for example, virtual machines in the cloud computing scenario. In some cases, the source device 12 and the destination device 14 may be equipped with components for wireless communication. Therefore, the source device 12 and the destination device 14 may be wireless communication devices.

A virtual scenario application (application, APP), such as a virtual reality (virtual reality, VR) application, an augmented reality (augmented reality, AR) application, or a mixed reality (mixed reality, MR) application may be installed on each of the source device 12 and the destination device 14, and the VR application, the AR application, or the MR application may be run based on a user operation (for example, tapping, touching, sliding, shaking, or voice control). The source device 12 and the destination device 14 may capture pictures/videos of any object in an environment via a camera and/or a sensor, and then display a virtual object on a display device based on the captured pictures/videos. The virtual object may be a virtual object (namely, an object in a virtual environment) in a VR scenario, an AR scenario, or an MR scenario.

It should be noted that, in this embodiment of this application, the virtual scenario applications in the source device 12 and the destination device 14 may be built-in applications of the source device 12 and the destination device 14, or may be applications that are provided by a third-party service provider and that are installed by a user. This is not specifically limited herein.

In addition, real-time video transmission applications, such as live broadcast applications, may be installed on the source device 12 and the destination device 14. The source device 12 and the destination device 14 may capture pictures/videos via the camera, and then display the captured pictures/videos on the display device.

In some cases, the video coding system 10 shown in FIG. 1a is merely an example and the technologies provided in embodiments of this application are applicable to video coding settings (for example, video encoding or video decoding). These settings do not necessarily include any data communication between an encoding device and a decoding device. In other examples, data is retrieved from a local memory, sent through a network, or the like. A video encoding device may encode data and store encoded data into the memory, and/or a video decoding device may retrieve data from the memory and decode the data. In some examples, encoding and decoding are performed by devices that do not communicate with one another, but simply encode data to a memory and/or retrieve and decode data from the memory.

FIG. 1b is the example block diagram of the video coding system 40 according to this embodiment of this application. As shown in FIG. 1b, the video coding system 40 may include an imaging device 41, the video encoder 20, and the video decoder 30 (and/or a video encoder/decoder implemented by the processing circuit 46), an antenna 42, one or more processors 43, one or more memories 44, and/or a display device 45.

As shown in FIG. 1b, the imaging device 41, the antenna 42, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 42 may be configured to transmit or receive an encoded bitstream of video data. Further, in some examples, the display device 45 may be configured to present the video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be a memory of any type, for example, a volatile memory (for example, a static random access memory (static random access memory, SRAM) or a dynamic random access memory (dynamic random access memory, DRAM)) or a nonvolatile memory (for example, a flash memory). In a non-limitative example, the memory 44 may be implemented by a cache memory. In other examples, the processing circuit 46 may include a memory (for example, a cache) for implementing a picture buffer.

In some examples, the video encoder 20 implemented by using the logic circuit may include a picture buffer (which is implemented by, for example, the processing circuit 46 or the memory 44) and a graphics processing unit (which is implemented by, for example, the processing circuit 46). The graphics processing unit may be communicatively coupled to the picture buffer. The graphics processing unit may be included in the video encoder 20 implemented by the processing circuit 46, to implement various modules discussed with reference to FIG. 2 and/or any other encoder system or subsystem described in this specification. The logic circuit may be configured to perform various operations discussed in this specification.

In some examples, the video decoder 30 may be implemented by the processing circuit 46 in a similar manner, to implement various modules discussed with reference to the video decoder 30 in FIG. 3 and/or any other decoder system or subsystem described in this specification. In some examples, the video decoder 30 implemented by using the logic circuit may include a picture buffer (which is implemented by the processing circuit 46 or the memory 44) and a graphics processing unit (which is implemented by, for example, the processing circuit 46). The graphics processing unit may be communicatively coupled to the picture buffer. The graphics processing unit may be included in the video decoder 30 implemented by the processing circuit 46, to implement various modules discussed with reference to FIG. 3 and/or any other decoder system or subsystem described in this specification.

In some examples, the antenna 42 may be configured to receive an encoded bitstream of video data. As described, the encoded bitstream may include data, an indicator, an index value, mode selection data, or the like related to video frame encoding described in this specification, for example, data related to coding partitioning (for example, a transform coefficient or a quantized transform coefficient, an optional indicator (as described), and/or data defining the coding partitioning). The video coding system 40 may further include the video decoder 30 that is coupled to the antenna 42 and that is configured to decode the encoded bitstream. The display device 45 is configured to present a video frame.

It should be understood that in this embodiment of this application, for the example described with reference to the video encoder 20, the video decoder 30 may be configured to perform a reverse process. With regard to a signaling syntax element, the video decoder 30 may be configured to receive and parse such a syntax element and correspondingly decode related video data. In some examples, the video encoder 20 may entropy encode the syntax element into an encoded video bitstream. In such examples, the video decoder 30 may parse such syntax element and decode the associated video data accordingly.

For ease of description, embodiments of this application are described by referring to versatile video coding (versatile video coding, VVC) reference software or high-efficiency video coding (high-efficiency video coding, HEVC) developed by the joint collaboration team on video coding (joint collaboration team on video coding, JCT-VC) of the ITU-T video coding experts group (video coding experts group, VCEG) and the ISO/IEC motion picture experts group (motion picture experts group, MPEG). A person of ordinary skill in the art understands that embodiments of this application are not limited to the HEVC or the VVC.

Encoder and encoding method

As shown in FIG. 2, the video encoder 20 includes an input end (or input interface) 201, a residual calculation unit 204, a transform processing unit 206, a quantization unit 208, an inverse quantization unit 210, and an inverse transform processing unit 212, a reconstruction unit 214, a loop filter 220, a decoded picture buffer (decoded picture buffer, DPB) 230, a mode selection unit 260, an entropy encoding unit 270, and an output end (or output interface) 272. The mode selection unit 260 may include an inter prediction unit 244, an intra prediction unit 254 and a partitioning unit 262. The inter prediction unit 244 may include a motion estimation unit and a motion compensation unit (not shown). The video encoder 20 shown in FIG. 2 may also be referred to as a hybrid video encoder or a video encoder based on a hybrid video codec.

Refer to FIG. 2. The inter prediction unit is a trained target model (also referred to as a neural network), and the neural network is used to process an input picture, picture area, or picture block, to generate a predictor of the input picture block. For example, a neural network for inter prediction is used to receive an input picture, picture area, or picture block, and generate a predictor of the input picture, picture area, or picture block.

The residual calculation unit 204, the transform processing unit 206, the quantization unit 208, and the mode selection unit 260 form a forward signal path of the encoder 20, whereas the inverse quantization unit 210, the inverse transform processing unit 212, the reconstruction unit 214, a buffer 216, the loop filter 220, the decoded picture buffer (decoded picture buffer, DPB) 230, the inter prediction unit 244, and the intra prediction unit 254 form a backward signal path of the encoder. The backward signal path of the encoder 20 corresponds to the signal path of the decoder (refer to the decoder 30 in FIG. 3). The inverse quantization unit 210, the inverse transform processing unit 212, the reconstruction unit 214, the loop filter 220, the decoded picture buffer 230, the inter prediction unit 244, and the intra prediction unit 254 are further referred to as forming a "built-in decoder" of the video encoder 20.

Picture and picture partitioning (picture and block)

The encoder 20 may be configured to receive, for example, via the input end 201, a picture (or picture data) 17, for example, a picture in a sequence of pictures forming a video or video sequence. The received picture or picture data may also be a pre-processed picture (or pre-processed picture data) 19. For ease of simplicity, the following description refers to the picture 17. The picture 17 may also be referred to as a current picture or a to-be-encoded picture (in particular in video coding to distinguish the current picture from other pictures, for example, previously encoded and/or decoded pictures of a same video sequence, namely, a video sequence that also includes the current picture).

A (digital) picture is or may be considered as a two-dimensional array or matrix including samples with intensity values. A sample in the array may also be referred to as a pixel (pixel or pel) (short for a picture element). Quantities of samples in horizontal and vertical directions (or axes) of the array or picture define the size and/or resolution of the picture. For representation of color, three color components are usually employed, to be specific, the picture may be represented as or include three sample arrays. In an RBG format or color space, a picture includes a corresponding red, green and blue sample array. However, in video coding, each pixel is usually represented in a luminance/chrominance format or color space, for example, YCbCr, which includes a luminance component indicated by Y (sometimes indicated by L) and two chrominance components indicated by Cb and Cr. The luminance (luma) component Y represents luma or gray level intensity (for example, both are the same in a gray-scale picture), while the two chrominance (chrominance, chroma for short) components Cb and Cr represent chroma or color information components. Accordingly, a picture in a YCbCr format includes a luminance sample array of luminance sample values (Y), and two chrominance sample arrays of chrominance values (Cb and Cr). Pictures in the RGB format may be converted or transformed into the YCbCr format and vice versa, the process is also referred to as color transformation or conversion. If a picture is monochrome, the picture may include only a luminance sample array. Accordingly, a picture may be, for example, an array of luma samples in a monochrome format or an array of luma samples and two corresponding arrays of chroma samples in 4:2:0, 4:2:2, and 4:4:4 color format.

In an embodiment, an embodiment of the video encoder 20 may include a picture partitioning unit (not shown in FIG. 2) configured to partition the picture 17 into a plurality of (usually non-overlapping) picture blocks 203. These blocks may also be referred to as root blocks, macro blocks (H.264/AVC), coding tree blocks (coding tree blocks, CTBs), or coding tree units (coding tree units, CTUs) in the H.265/HEVC and VVC standards. The picture partitioning unit may be configured to use the same block size for all pictures of a video sequence and the corresponding grid defining the block size, or to change the block size between pictures or subsets or groups of pictures, and partition each picture into the corresponding blocks.

In other embodiments, the video encoder may be configured to directly receive the block 203 of the picture 17, for example, one, several or all blocks forming the picture 17. The picture block 203 may also be referred to as a current picture block or picture block to be coded.

Like the picture 17, the picture block 203 is also or may be considered as a two-dimensional array or matrix including samples with intensity values (sample values), but the picture block 203 is smaller than the picture 17. In other words, the block 203 may include one sample array (for example, a luminance array in the case of a monochrome picture 17, or a luminance or chrominance array in the case of a color picture), three sample arrays (for example, one luminance array and two chrominance arrays in the case of a color picture 17), or any other quantity and/or type of arrays based on a used color format. Quantities of samples of the block 203 in the horizontal and vertical directions (or axes) define the size of the block 203. Accordingly, a block may be an $M \times N$ (M-column by N-row) array of samples, an array of $M \times N$ transform coefficients, or the like.

In an embodiment, the video encoder 20 shown in FIG. 2 may be configured to encode the picture 17 block by block, for example, encode and predict each block 203.

In an embodiment, the video encoder 20 shown in FIG. 2 may be further configured to partition and/or encode the picture by using slices (also referred to as video slices), where the picture may be partitioned or encoded using one or more slices (typically non-overlapping). Each slice may include one or more blocks (for example, coding tree units, CTUs) or one or more groups of blocks (for example, tiles (tiles) in the H.265/HEVC/VVC standard and bricks (bricks) in the VVC standard).

In an embodiment, the video encoder 20 shown in FIG. 2 may be further configured to partition and/or encode the picture by using slices/tile groups (also referred to as video tile groups) and/or tiles (also referred to as video tiles). The picture may be partitioned or encoded by using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Residual calculation

The residual calculation unit 204 is configured to calculate a residual block 205 based on the picture block (or an original block) 203 and a prediction block 265 (where the prediction block 265 is described in detail subsequently), for example, obtain the residual block 205 in the pixel domain by subtracting a sample value of the prediction block 265 from a sample value of the picture block 203 sample by sample (pixel by pixel).

Transform

The transform processing unit 206 may be configured to apply a transform, for example, a discrete cosine transform (discrete cosine transform, DCT) or discrete sine transform (discrete sine transform, DST), on the sample values of the residual block 205 to obtain transform coefficients 207 in the transform domain. The transform coefficients 207 may also be referred to as transform residual coefficients and represent the residual block 205 in the transform domain.

The transform processing unit 206 may be configured to apply integer approximations of DCT/DST, such as transforms specified in HEVC/H.265. Compared with an orthogonal DCT transform, such integer approximations are usually scaled based on a factor. To preserve a norm of a residual block that is processed through forward transform and inverse transform, another scale factor is used as a part of a transform process. The scale factor is usually selected based on some constraints, for example, the scale factor being a power of two for a shift operation, a bit depth of the transform coefficient, and a tradeoff between accuracy and implementation costs. For example, a specific scale factor is specified for the inverse transform by the inverse transform processing unit 212 at the encoder 20 side (and a corresponding inverse transform by, for example, an inverse transform processing unit 312 at the decoder 30 side), and correspondingly, a corresponding scale factor may be specified for the forward transform by the transform processing unit 206 at the encoder 20 side.

In an embodiment, the video encoder 20 (correspondingly, the transform processing unit 206) may be configured to output a transform parameter like one or more transform types, for example, directly output the transform parameter or output the transform parameter after the transform parameter is encoded or compressed by the entropy encoding unit 270, so that, for example, the video decoder 30 may receive and use the transform parameter for decoding.

Quantization

The quantization unit 208 may be configured to quantize the transform coefficients 207 to obtain quantized transform coefficients 209, for example, by applying scalar quantization or vector quantization. The quantized transform coefficient 209 may also be referred to as a quantized residual coefficient 209.

A quantization process may reduce a bit depth related to some or all of the transform coefficients 207. For example, an n-bit transform coefficient may be rounded down to an m-bit transform coefficient during quantization, where n is greater than m. A quantization degree may be modified by adjusting a quantization parameter (quantization parameter, QP). For example, for the scalar quantization, different scales may be used to implement finer or coarser quantization. A smaller quantization step size corresponds to finer quantization, and a larger quantization step size corresponds to coarser quantization. An appropriate quantization step size may be indicated by a quantization parameter (quantization parameter, QP). For example, the quantization parameter may be an index to a predefined set of appropriate quantization step sizes. For example, a smaller quantization parameter may correspond to finer quantization (a smaller quantization step size) and a larger quantization parameter may correspond to coarser quantization (a larger quantization step size), or vice versa. The quantization may include division by a quantization step and a corresponding and/or inverse dequantization, for example, by the inverse quantization unit 210, may include multiplication by the quantization step. Embodiments according to some standards, for example, HEVC, may be configured to use a quantization parameter to determine the quantization step size. Generally, the quantization step size may be calculated based on a quantization parameter by using a fixed point approximation of an equation including division. Additional scale factors may be introduced for quantization and dequantization to restore the norm of the residual block, where the norm of the residual block may be modified because of a scale used in the fixed point approximation of the equation for the quantization step and the quantization parameter. In one example implementation, the scaling of the inverse transform and dequantization might be combined. Alternatively, customized quantization tables may be used and signaled from an encoder to a decoder, for example, in a bitstream. The quantization is a lossy operation, where the loss increases with increasing of the quantization step size.

In an embodiment, the video encoder 20 (correspondingly, the quantization unit 208) may be configured to output a quantization parameter (quantization parameter, QP), for example, directly output the quantization parameter or output the quantization parameter after the quantization parameter is encoded or compressed by the entropy encoding unit 270, so that, for example, the video decoder 30 may receive and use the quantization parameter for decoding.

Inverse quantization

The inverse quantization unit 210 is configured to apply the inverse quantization of the quantization unit 208 on the quantized coefficients to obtain dequantized coefficients 211, for example, by applying the inverse of the quantization scheme applied by the quantization unit 208 based on or using the same quantization step size as the quantization unit 208. The dequantized coefficients 211 may also be referred to as dequantized residual coefficients 211 and correspond, although typically not identical to the transform coefficients due to the loss by quantization, to the transform coefficients 207.

Inverse transform

The inverse transform processing unit 212 is configured to apply the inverse transform of the transform applied by the transform processing unit 206, for example, an inverse discrete cosine transform (discrete cosine transform, DCT) or inverse discrete sine transform (discrete sine transform, DST), to obtain a reconstructed residual block 213 (or corresponding dequantized coefficients 213) in the pixel domain. The reconstructed residual block 213 may also be referred to as a transform block 213.

Reconstruction

The reconstruction unit 214 (for example, an adder 214) is configured to add the transform block 213 (namely, the reconstructed residual block 213) to the prediction block 265 to obtain a reconstructed block 215 in the pixel domain, for example, by adding the sample values of the reconstructed residual block 213 and the sample values of the prediction block 265.

Filtering

A loop filter unit 220 (also referred to as the "loop filter" 220 for short) is configured to filter the reconstructed block 215 to obtain a filtered block 221, or usually configured to filter a reconstructed sample to obtain a filtered sample value. The loop filter unit is, for example, configured to smooth pixel transitions, or otherwise improve the video quality. The loop filter unit 220 may include one or more loop filters such as a de-blocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. For example, the loop filter unit 220 may include a de-blocking filter, a SAO filter and an ALF filter. An order of a filtering process may be the de-blocking filter, the SAO filter and the ALF filter. For another example, a process referred to as luma mapping with chroma scaling (luma mapping with chroma scaling, LMCS) (namely, an adaptive in-loop reshaper) is added. This process is performed before deblocking. For another example, a de-blocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 220 is shown as the loop filter in FIG. 2, in another configuration, the loop filter unit 220 may be implemented as a post loop filter. The filtered block 221 may also be referred to as a filtered reconstructed block 221.

In an embodiment, the video encoder 20 (correspondingly, the loop filter unit 220) may be configured to output loop filter parameters (such as a SAO filter parameter, an ALF filter parameter, or an LMCS parameter), for example, directly output the loop filter parameters or output the loop filter parameters after entropy encoding is performed on the loop filter parameters by the entropy encoding unit 270, so that, for example, the decoder 30 may receive and use a same loop filter parameter or different loop filter parameters for decoding.

Decoded picture buffer

The decoded picture buffer (decoded picture buffer, DPB) 230 may be a memory that stores reference pictures, or in general reference picture data, for encoding video data by the video encoder 20. The DPB 230 may be formed by any one of a variety of memory devices, such as a dynamic random access memory (dynamic random access memory, DRAM), including a synchronous DRAM (synchronous DRAM, SDRAM), a magnetoresistive RAM (magnetoresistive RAM, MRAM), a resistive RAM (resistive RAM, RRAM), or another type of storage device. The decoded picture buffer 230 may be configured to store one or more filtered blocks 221. The decoded picture buffer 230 may be further configured to store other previously filtered blocks, for example, previously reconstructed and filtered blocks 221, of a same current picture or different pictures such as previously reconstructed pictures, and may provide complete previously reconstructed, that is, decoded, pictures (and corresponding reference blocks and samples) and/or a partially reconstructed current picture (and a corresponding reference block and sample), for, for example, inter prediction. The decoded picture buffer 230 may be further configured to store one or more unfiltered reconstructed blocks 215, or generally store unfiltered reconstructed samples, for example, the reconstructed block 215 that is not filtered by the loop filter unit 220, or a reconstructed block or a reconstructed sample on which no any other processing is performed.

Mode selection (partitioning and prediction)

The mode selection unit 260 includes the partitioning unit 262, the inter prediction unit 244, and the intra prediction unit 254, and is configured to receive or obtain original picture data such as the original block 203 (the current block 203 of the current picture 17) and the reconstructed picture data, for example, a filtered and/or unfiltered reconstructed sample or reconstructed block of a same picture (the current picture) and/or one or more previously decoded pictures, from the decoded picture buffer 230 or another buffer (for example, a column buffer, not shown in FIG. 2). The reconstructed picture data is used as reference picture data for prediction, for example, inter prediction or intra prediction, to obtain a prediction block 265 or a predictor 265.

The mode selection unit 260 may be configured to determine or select partitioning for a current block (including non-partitioning) and a prediction mode (for example, an intra or inter prediction mode) and generate a corresponding prediction block 265, which is used for calculation of the residual block 205 and for the reconstruction of the reconstructed block 215.

In an embodiment, the mode selection unit 260 may be configured to select partitioning and prediction modes (for example, from prediction modes supported by or available to the mode selection unit 260). The prediction mode provides best matching or a minimum residual (the minimum residual means better compression for transmission or storage), provides minimum signaling overheads (the minimum signaling overheads mean better compression for transmission or storage), or considers or balances both the minimum residual and the minimum signaling overheads. The mode selection unit 260 may be configured to determine the partitioning and prediction mode based on rate distortion optimization (rate distortion Optimization, RDO), that is, select the prediction mode that provides a minimum rate distortion optimization. The terms "best", "lowest", "optimal" and the like in this specification do not necessarily mean "best", "lowest", "optimal" in general, but may also refer to situations in which termination or selection criteria are met. For example, values that exceed or fall below a threshold or other restrictions may result in "suboptimal selections" but reduce complexity and processing time.

In other words, the partitioning unit 262 may be configured to partition a picture from a video sequence into a sequence of coding tree units (coding tree units, CTUs), and the CTU 203 may be further partitioned into smaller block partitions or sub-blocks (which form the blocks again), for example, iteratively using quad-tree partitioning (quad-tree partitioning, QT), binary-tree partitioning (binary-tree partitioning, BT) or triple-tree partitioning (triple-tree partitioning, TT) or any combination thereof, and to perform, for example, prediction for each of the block partitions or sub-blocks, where the mode selection includes selection of a tree structure of the partitioned block 203 and prediction modes applied to each of the block partitions or sub-blocks.

In the following partitioning (for example, by the partitioning unit 262) and prediction processing (for example, by the inter prediction unit 244 and the intra prediction unit 254) performed by the video encoder 20 will be explained in more detail.

Partitioning

The partitioning unit 262 may partition (or split) a picture block (or a CTU) 203 into smaller partitions, for example, square or rectangular smaller blocks. For a picture that has three sample arrays, a CTU includes an N×N block of luminance samples together with two corresponding blocks of chrominance samples. A maximum allowed size of the luminance block in the CTU is specified to be 128×128 in the developing versatile video coding (versatile video coding, VVC) standard, but it may be specified to be a value different from 128×128 in the future, for example, 256×256. The CTUs of a picture may be clustered/grouped as slices/tile groups, tiles, or bricks. A tile covers a rectangular area of a picture, and a tile may be divided into one or more bricks. A brick includes a plurality of CTU rows in a tile. A tile that is not partitioned into a plurality of bricks can be referred to as a brick. However, a brick is a true subset of a tile and is not referred to as a tile. There are two modes of tile groups are supported in VVC, namely the raster-scan slice/tile group mode and the rectangular slice mode. In the raster-scan tile group mode, a slice/tile group includes a sequence of tiles in tile raster scan of a picture. In the rectangular slice mode, a slice includes a plurality of bricks of a picture that collectively form a rectangular area of the picture. The bricks within a rectangular slice are in the order of brick raster scan of the slice. These smaller blocks (which may also be referred to as sub-blocks) may be further partitioned into even smaller partitions. This is also referred to as tree partitioning or hierarchical tree partitioning. A root block, for example, at a root tree level 0 (a hierarchy level 0, and a depth 0) may be recursively partitioned into two or more blocks at a next lower tree level, for example, nodes at a tree level 1 (a hierarchy level 1, and a depth 1). These blocks may be again partitioned into two or more blocks of a next lower level, for example, a tree level 2 (a hierarchy level 2, a depth 2), and the like until the partitioning is terminated (for example, because a termination criterion is fulfilled, for example, a maximum tree depth or minimum block size is reached). Blocks which are not further partitioned are also referred to as leaf-blocks or leaf nodes of the tree. A tree using partitioning into two partitions is referred to as a binary tree (binary-tree, BT), a tree using partitioning into three partitions is referred to as a ternary tree (ternary-tree, TT), and a tree using partitioning into four partitions is referred to as a quad tree (quad-tree, QT).

For example, a coding tree unit (CTU) may be or include a CTB of luminance samples, two corresponding CTBs of chrominance samples of a picture that has three sample arrays, a CTB of samples of a monochrome picture, or a CTB of samples of a picture that is encoded by using three separate color planes and syntax structures (for coding the samples). Correspondingly, a coding tree block (CTB) may be an $N \times N$ block of samples for some value of N such that the division of a component into CTBs is partitioning. A coding unit (coding unit, CU) may be or include a coding block of luma samples, two corresponding coding blocks of chroma samples of a picture that has three sample arrays, or a coding block of samples of a monochrome picture or a picture that is coded using three separate color planes and syntax structures (for coding the samples). Correspondingly a coding block (CB) may be an $M \times N$ block of samples for some values of M and N such that the division of a CTB into coding blocks is partitioning.

In embodiments, for example, according to HEVC, a coding tree unit (CTU) may be split into CUs by using a quad-tree structure denoted as a coding tree. The decision whether to code a picture area using inter (temporal) or intra (spatial) prediction is made at the leaf CU level. Each leaf CU can be further split into one, two or four PUs based on a PU splitting type. Inside one PU, the same prediction process is applied and the relevant information is transmitted to the decoder on a PU basis. After the residual block is obtained by applying the prediction process based on the PU splitting type, a leaf CU can be partitioned into transform units (TUs) based on another quad-tree structure similar to a coding tree for the CU.

For example, in an embodiment, according to a developing latest video coding standard (referred to as versatile video coding (VVC)), a combined quad tree with a nested multi-type tree (such as a binary tree and a ternary tree) is used to split a segmentation structure for partitioning a coding tree unit. In a coding tree structure in a coding tree unit, a CU may be square or rectangular. For example, the coding tree unit (CTU) is first partitioned by a quad-tree structure. A quad-tree leaf node is further partitioned by a multi-type tree structure. There are four splitting types in the multi-type tree structure: vertical binary-tree splitting (SPLIT_BT_VER), horizontal binary-tree splitting (SPLIT_BT_HOR), vertical ternary-tree splitting (SPLIT_TT_VER), and horizontal ternary-tree splitting (SPLIT_TT_HOR). Leaf nodes of the multi-type tree are referred to as coding units (CUs). Such segmentation is used for prediction and transform processing without any other partitioning, unless the CU is excessively large for a maximum transform length. This means that, in most cases, the CU, the PU, and the TU have a same block size in a coding block structure in which a quad tree is nested with multi-type trees. An exception occurs when a maximum supported transform length is smaller than a width or height of a color component of the CU. A unique signaling mechanism of partitioning or splitting information in the coding structure in which the quad tree is nested with the multi-type trees is formulated in the VVC. In the signaling mechanism, a coding tree unit (CTU) is treated as a root of a quad tree and is first partitioned by the quad-tree structure. Each quad-tree leaf node (when sufficiently large to allow it) is then further partitioned by a multi-type tree structure. In the multi-type tree structure, a first flag (mtt_split cu flag) indicates whether the node is further partitioned; when the node is further partitioned, a second flag (mtt_split_cu_vertical_flag) indicates a splitting direction; and then a third flag (mtt_split cu binary_flag) indicates whether the splitting is binary-tree splitting or ternary-tree splitting. Based on values of mtt_split_cu_vertical_flag and mtt_split_cu_binary_flag, the decoder may derive a multi-type tree split mode (MttSplitMode) of the CU based on a predefined rule or table. It should be noted that, for a specific design, for example, a $64 \times 64$ luminance block and $32 \times 32$ chrominance pipeline design in VVC hardware decoders, TT splitting is not allowed when either a width or a height of a luminance coding block is greater than 64. TT splitting is also not allowed when a width or a height of a chrominance coding block is greater than 32. In the pipeline design, a picture is split into a plurality of virtual pipeline data units (virtual pipeline data units, VPDUs), and the VPDUs are defined as non-overlapping units in the picture. In the hardware decoder, consecutive VPDUs are simultaneously processed in a plurality of pipeline stages. A VPDU size is roughly proportional to a buffer size in most pipeline stages. Therefore, a small VPDU size needs to be kept. In most hardware decoders, the VPDU size may be set to a maximum transform block (transform block, TB) size. However, in the VVC, ternary-tree (TT) partitioning and binary-tree (BT) partitioning may lead to an increase in the VPDU size.

In addition, it should be noted that, when a portion of a tree node block exceeds the bottom or a right picture boundary, the tree node block is forced to be split until the all samples of every coded CU are located inside the picture boundaries.

For example, an intra sub-partition (intra sub-partition, ISP) tool may divide a luminance intra prediction block vertically or horizontally into two or four sub-partitions based on a block size.

In one example, the mode selection unit 260 of the video encoder 20 may be configured to perform any combination of the partitioning technologies described herein.

As described above, the video encoder 20 is configured to determine or select a best prediction mode or an optimal prediction mode from a (pre-determined) prediction mode set. The prediction mode set may include, for example, an intra prediction mode and/or an inter prediction mode.

Intra prediction

An intra prediction mode set may include 35 different intra prediction modes, for example, non-directional modes such as a DC (or average) mode and a planar mode, or directional modes such as those defined in HEVC, or may include 67 different intra prediction modes, for example, non-directional modes such as a DC (or average) mode and a planar mode, or directional modes such as those defined in VVC. As an example, several conventional angular intra prediction modes are adaptively replaced with wide-angle intra prediction modes for the non-square blocks, for example, as defined in VVC. As another example, to avoid division operations for DC prediction, only the longer side is used to compute the average for non-square blocks. In addition, the results of intra prediction of the planar mode may be further modified by using a position dependent intra prediction combination (position dependent intra prediction combination, PDPC) method.

The intra prediction unit 254 is configured to use reconstructed samples of neighboring blocks of a same current picture in the intra prediction mode in the intra prediction mode set, to generate an intra prediction block 265.

The intra prediction unit 254 (or in general the mode selection unit 260) is further configured to output intra prediction parameters (or in general information indicative of the selected intra prediction mode for the block) to the entropy encoding unit 270 in form of syntax elements 266 for inclusion into the encoded picture data 21, so that, for example, the video decoder 30 may receive and use the prediction parameters for decoding.

Intra prediction modes in HEVC include a direct current prediction mode, a planar prediction mode, and 33 angular prediction modes. That is, there are 35 candidate prediction modes in total. A current block may use pixels of reconstructed picture blocks on left and upper sides as a reference to perform intra prediction. A picture block that is in a surrounding area of the current block and that is used to perform intra prediction on the current block becomes a reference block, and a pixel in the reference block is referred to as a reference pixel. In the 35 candidate prediction modes, the direct current prediction mode is applicable to an area whose texture is flat in the current block, and all pixels in the area use an average value of reference pixels in the reference block as prediction. The planar prediction mode is applicable to a picture block whose texture changes smoothly. For the current block that meets the condition, bilinear interpolation is performed by using a reference pixel in a reference block as prediction of all pixels in the current block. In the angle prediction mode, a value of a reference pixel in a corresponding reference block is copied along an angle as prediction of all pixels in the current block by using a feature that texture of the current block is highly correlated with texture of a neighboring reconstructed picture block.

An HEVC encoder selects an optimal intra prediction mode from the 35 candidate prediction modes for the current block, and writes the optimal intra prediction mode into a video bitstream. To improve coding efficiency of intra prediction, the encoder/decoder derives three most probable modes from respective optimal intra prediction modes of reconstructed picture blocks that use intra prediction in the surrounding area. If the optimal intra prediction mode selected for the current block is one of the three most probable modes, a first index is encoded to indicate that the selected optimal intra prediction mode is one of the three most probable modes. If the selected optimal intra prediction mode is not one of the three most probable modes, a second index is encoded to indicate that the selected optimal intra prediction mode is one of the other 32 modes (modes other than the three most probable modes in the 35 candidate prediction modes). The HEVC standard uses 5-bit fixed-length code as the second index.

A method for deriving the three most probable modes by the HEVC encoder includes: selecting optimal intra prediction modes of the left neighboring picture block and the upper neighboring picture block of the current block, and putting the optimal intra prediction modes into a set; and if the two optimal intra prediction modes are the same, retaining only one intra prediction mode in the set. If the two optimal intra prediction modes are the same and both are angle prediction modes, two angle prediction modes adjacent to an angle direction are further selected and added to the set. Otherwise, the planar prediction mode, the direct current mode, and a vertical prediction mode are sequentially selected and added to the set until a quantity of modes in the set reaches 3.

After performing entropy decoding on the bitstream, the HEVC decoder obtains mode information of the current block. The mode information includes an identifier indicating whether the optimal intra prediction mode of the current block is in the three most probable modes, an index of the optimal intra prediction mode of the current block in the three most probable modes, or an index of the optimal intra prediction mode of the current block in the other 32 modes.

Inter prediction

In a possible implementation, an inter prediction mode set depends on available reference pictures (that is, previous at least partially decoded pictures, for example, stored in the DBP 230) and other inter prediction parameters, for example, whether the entire reference picture or only a part, for example, a search window area around the area of the current block, of the reference picture is used for searching for a best matching reference block, and/or for example, whether pixel interpolation is applied, for example, half-pixel, quarter-pixel and/or 1/16-pixel interpolation, or not.

Additional to the above prediction modes, skip mode, direct mode and/or other inter prediction mode may be applied.

For example, a merge candidate list of an extended merge prediction mode includes the following five classes of candidates in order: spatial MVP from spatial neighboring CUs, temporal MVP from collocated CUs, history-based MVP from an FIFO table, pairwise average MVP, and zero MVs. In addition, a bilateral-matching based decoder side motion vector refinement (decoder side motion vector refinement, DMVR) may be applied to increase the accuracy of the MVs of the merge mode. A merge mode with MVD (merge mode with MVD, MMVD) comes from a merge mode with motion vector differences. An MMVD flag is signaled right after sending a skip flag and merge flag to specify whether MMVD mode is used for a CU. A CU-level adaptive motion vector resolution (adaptive motion vector resolution, AMVR) scheme may be used. AMVR supports MVD of the CU to be coded in different precision. An MVD of a current CU may be adaptively selected based on a prediction mode of the current CU. When a CU is encoded in the merge mode, a combined inter/intra prediction (combined inter/intra prediction, CIIP) mode may be applied to the current CU. Weighted averaging of the inter and intra prediction signals is performed to obtain the CIIP prediction. For affine motion compensation prediction, an affine motion field of a block is described by using motion information of a motion vector of two control points (four parameters) or three control points (six parameters). Subblock-based temporal motion vector prediction (subblock-based temporal motion vector prediction, SbTMVP) is similar to the temporal motion vector prediction (temporal motion vector prediction, TMVP) in HEVC, but predicts a motion vector of a sub-CU in a current CU. A bi-directional optical flow (bi-directional optical flow, BDOF), previously referred to as BIO, is a simpler version that requires much less computation, especially in terms of a quantity of multiplications and a value of a multiplier. In a triangle partition mode, a CU is split evenly into two triangular portions through diagonal splitting and anti-diagonal splitting. In addition, a bi-prediction mode is extended beyond simple averaging to support weighted averaging of two prediction signals.

The inter prediction unit 244 may include a motion estimation (motion estimation, ME) unit and a motion compensation (motion compensation, MC) unit (both not shown in FIG. 2). The motion estimation unit may be configured to receive or obtain the picture block 203 (the current picture block 203 of the current picture 17) and a decoded picture 231, or at least one or more previously reconstructed blocks, for example, reconstructed blocks of one or more other/different previously decoded pictures 231, for motion estimation. For example, a video sequence may include the current picture and the previously decoded picture 231, or in other words, the current picture and the previously decoded picture 231 may be a part of or form a sequence of pictures forming the video sequence.

For example, the encoder 20 may be configured to select a reference block from a plurality of reference blocks of a same picture or different pictures of a plurality of other pictures and provide a reference picture (or a reference picture index) and/or an offset (spatial offset) between a position (x and y coordinates) of the reference block and a position of the current block as inter prediction parameters to the motion estimation unit. This offset is also referred to as a motion vector (motion vector, MV).

The motion compensation unit is configured to obtain, for example, receive, an inter prediction parameter and perform inter prediction based on or using the inter prediction parameter to obtain an inter prediction block 246. Motion compensation performed by the motion compensation unit may include extracting or generating a prediction block based on a motion/block vector determined through motion estimation, and may further include performing interpolation on sub-pixel precision. Interpolation filtering may be performed to generate a sample of another pixel from a sample of a known pixel, to potentially increase a quantity of candidate prediction blocks that may be used to encode a picture block. Upon receiving the motion vector corresponding to the PU of the current picture block, the motion compensation unit may locate a prediction block to which the motion vector points in one of the reference picture lists.

The motion compensation unit may further generate syntax elements related to a block and a video slice for use by the video decoder 30 in decoding picture blocks of the video slice. In addition or as an alternative to slices and corresponding syntax elements, tile groups and/or tiles and corresponding syntax elements may be generated or used.

In a process of obtaining a candidate motion vector list in an advanced motion vector prediction (advanced motion vector prediction, AMVP) mode, a motion vector (motion vector, MV) that may be added to the candidate motion vector list as an alternative includes MVs of spatially neighboring and temporally neighboring picture blocks of the current block. The MV of the spatially neighboring picture block may include an MV of a left candidate picture block of the current block and an MV of an upper candidate picture block of the current block. For example, FIG. 4 is a diagram of an example of candidate picture blocks according to an embodiment of this application. As shown in FIG. 4, a set of left candidate picture blocks includes {A0, A1}, a set of upper candidate picture blocks includes {B0, B1, B2}, and a set of temporally neighboring candidate picture blocks includes {C, T}. All the three sets may be added to the candidate motion vector list as alternatives. However, according to an existing coding standard, a maximum length of the candidate motion vector list for AMVP is 2. Therefore, it is necessary to determine to add MVs of a maximum of two picture blocks to the candidate motion vector list from the three sets in a specified order. The order may be as follows: The set of left candidate picture blocks {A0, A1} of the current block is preferentially considered (where A0 is first considered, and A1 is then considered if A0 is unavailable); then the set of upper candidate picture blocks {B0, B1, B2} of the current block is considered (where B0 is first considered, B1 is then considered if B0 is unavailable, and B2 is then considered if B1 is unavailable); and finally, the set of temporally neighboring candidate picture blocks {C, T} of the current block is considered (where T is first considered, and C is then considered if T is unavailable).

After the candidate motion vector list is obtained, an optimal MV is determined from the candidate motion vector list based on a rate distortion cost (rate distortion cost, RD cost), and a candidate motion vector with a minimum RD cost is used as a motion vector predictor (motion vector predictor, MVP) of the current block. The rate distortion cost is calculated according to the following formula:

$$J = SAD + \lambda R$$

J represents an RD cost, SAD is a sum of absolute differences (sum of absolute differences, SAD), obtained through motion estimation based on a candidate motion vector, between a pixel value of a prediction block and a pixel value of the current block, R represents a bit rate, and $\lambda$ represents a Lagrange multiplier.

The encoder side transfers an index of the determined MVP in the candidate motion vector list to the decoder side. Further, the encoder side may perform motion search in an MVP-centered neighboring domain, to obtain an actual motion vector of the current block. The encoder side calculates a motion vector difference (motion vector difference, MVD) between the MVP and the actual motion vector, and transfers the MVD to the decoder side. The decoder side parses the index, finds the corresponding MVP in the candidate motion vector list based on the index, parses the MVD, and adds the MVD and the MVP to obtain the actual motion vector of the current block.

In a process of obtaining a candidate motion information list in a merge (Merge) mode, motion information that can be added to the candidate motion information list as an alternative includes motion information of the spatially neighboring picture block or temporally neighboring picture block of the current block. The spatially neighboring picture block and the temporally neighboring picture block may be shown in FIG. 4. Candidate motion information corresponding to the spatially neighboring picture block in the candidate motion information list comes from five spatially neighboring blocks (A0, A1, B0, B1, and B2). If the spatially neighboring block is unavailable or is in an intra prediction mode, motion information of the spatially neighboring block is not added to the candidate motion information list. Temporal candidate motion information of the current block is obtained by scaling an MV of a block at a corresponding location in a reference frame based on picture order counts (picture order counts, POCs) of the reference frame and a current frame. Whether a block at a location T in the reference frame is available is first determined. If the block is not available, a block at a location C is selected. After the candidate motion information list is obtained, optimal motion information is determined from the candidate motion information list based on the RD cost as motion information of the current block. The encoder side transmits an index value (denoted as a merge index) of a position of the optimal motion information in the candidate motion information list to the decoder side.

Entropy encoding

The entropy encoding unit 270 is configured to apply, for example, an entropy coding algorithm or scheme (for example, a variable length coding (variable length coding, VLC) scheme, a context adaptive VLC (context adaptive VLC, CALVC) scheme, an arithmetic coding scheme, a binarization algorithm, context adaptive binary arithmetic coding (context adaptive binary arithmetic coding, CABAC), syntax-based context-adaptive binary arithmetic coding (syntax-based context-adaptive binary arithmetic coding, SBAC), probability interval partitioning entropy (probability interval partitioning entropy, PIPE) coding or another entropy coding methodology or technique) on the quantization residual coefficients 209, inter prediction parameters, intra prediction parameters, loop filter parameters and/or other syntax elements to obtain encoded picture data 21 which can be output via the output end 272, for example, in the form of an encoded bitstream 21, so that, for example, the video decoder 30 may receive and use the parameters for decoding. The encoded bitstream 21 may be transmitted to the video decoder 30, or stored in a memory for later transmission or retrieval by the video decoder 30.

Another structural variation of the video encoder 20 may be used to encode the video stream. For example, a non-transform-based encoder 20 may quantize a residual signal directly without the transform processing unit 206 for some blocks or frames. In another implementation, the encoder 20 may have the quantization unit 208 and the inverse quantization unit 210 combined into a single unit.

Decoder and decoding method

As shown in FIG. 3, the video decoder 30 is configured to receive encoded picture data 21 (for example, the encoded bitstream 21), for example, encoded by the encoder 20, to obtain a decoded picture 331. The encoded picture data or bitstream includes information for decoding the encoded picture data, for example, data that represents picture blocks of an encoded video slice (and/or tile groups or tiles), and related syntax elements.

In the example in FIG. 3, the decoder 30 includes an entropy decoding unit 304, an inverse quantization unit 310, an inverse transform processing unit 312, a reconstruction unit 314 (for example, an adder 314), a loop filter 320, a decoded picture buffer (DBP) 330, a mode application unit 360, an inter prediction unit 344, and an intra prediction unit 354. The inter prediction unit 344 may be or include a motion compensation unit. In some examples, the video decoder 30 may perform a decoding process generally reciprocal to the encoding process described with reference to the video encoder 100 in FIG. 2.

As explained with regard to the encoder 20, the inverse quantization unit 210, the inverse transform processing unit 212, the reconstruction unit 214, the loop filter 220, the decoded picture buffer DPB 230, the inter prediction unit 344, and the intra prediction unit 354 are further referred to as forming a "built-in decoder" of the video encoder 20. Accordingly, the inverse quantization unit 310 may be identical in function to the inverse quantization unit 110, the inverse transform processing unit 312 may be identical in function to the inverse transform processing unit 122, the reconstruction unit 314 may be identical in function to the reconstruction unit 214, the loop filter 320 may be identical in function to the loop filter 220, and the decoded picture buffer 330 may be identical in function to the decoded picture buffer 230. Therefore, the explanations provided for corresponding units and functions of the video encoder 20 are correspondingly applicable to corresponding units and functions of the video decoder 30.

Entropy decoding

The entropy decoding unit 304 is configured to parse the bitstream 21 (or in general encoded picture data 21) and perform, for example, entropy decoding on the encoded picture data 21 to obtain quantized coefficients 309 and/or decoded coding parameters (not shown in FIG. 3), for example, any or all of inter prediction parameters (for example, a reference picture index and a motion vector), intra prediction parameters (for example, an intra prediction mode or an index), transform parameters, quantization parameters, loop filter parameters, and/or other syntax elements. The entropy decoding unit 304 may be configured to apply a decoding algorithm or scheme corresponding to the encoding scheme of the entropy encoding unit 270 of the encoder 20. The entropy decoding unit 304 may be further configured to provide the inter prediction parameter, the intra prediction parameter, and/or another syntax element to the mode application unit 360, and provide another parameter to another unit of the decoder 30. The video decoder 30 may receive the syntax elements at the video slice level and/or the video block level. In addition or as an alternative to slices and corresponding syntax elements, tile groups and/or tiles and corresponding syntax elements may be received or used.

Inverse quantization

The inverse quantization unit 310 may be configured to receive a quantization parameter (quantization parameter, QP) (or generally, information related to dequantization) and a quantized coefficient from the encoded picture data 21 (for example, parsed and/or decoded by the entropy decoding unit 304), and dequantize the decoded quantized coefficient 309 based on the quantization parameter, to obtain a dequantized coefficient 311. The dequantized coefficient 311 may also be referred to as a transform coefficient 311. The inverse quantization process may include use of a quantization parameter calculated by the video encoder 20 for each video block in a video slice to determine a degree of quantization and, likewise, a degree of inverse quantization that needs to be applied.

Inverse transform

The inverse transform processing unit 312 may be configured to receive the dequantized coefficients 311, also referred to as the transform coefficients 311, and apply a transform to the dequantized coefficients 311 to obtain a reconstructed residual block 213 in the pixel domain. The reconstructed residual block 213 may also be referred to as a transform block 313. The transform may be an inverse transform, for example, an inverse DCT, an inverse DST, an inverse integer transform, or a conceptually similar inverse transform process. The inverse transform processing unit 312 may be further configured to receive transform parameters or corresponding information from the encoded picture data 21 (for example, by parsing and/or decoding, for example, by the entropy decoding unit 304) to determine the transform to be applied to the dequantized coefficients 311.

Reconstruction

The reconstruction unit 314 (for example, the adder 314) is configured to add the reconstructed residual block 313 to the prediction block 365 to obtain a reconstructed block 315 in the pixel domain, for example, by adding the sample values of the reconstructed residual block 313 and the sample values of the prediction block 365.

Filtering

The loop filter unit 320 (either in or after a coding loop) is configured to filter the reconstructed block 315 to obtain a filtered block 321, to perform smooth pixel conversion or improve video quality. The loop filter unit 320 may include one or more loop filters such as a de-blocking filter, a sample-adaptive offset (sample-adaptive offset, SAO) filter or one or more other filters, for example, an adaptive loop filter (adaptive loop filter, ALF), a noise suppression filter (noise suppression filter, NSF), or any combination thereof. For example, the loop filter unit 220 may include a de-blocking filter, a SAO filter, and an ALF filter. An order of a filtering process may be the de-blocking filter, the SAO filter, and the ALF filter. For another example, a process referred to as luma mapping with chroma scaling (luma mapping with chroma scaling, LMCS) (namely, an adaptive in-loop reshaper) is added. This process is performed before deblocking. For another example, a de-blocking filter process may be also applied to internal sub-block edges, for example, affine sub-blocks edges, ATMVP sub-blocks edges, sub-block transform (sub-block transform, SBT) edges, and intra sub-partition (intra sub-partition, ISP) edges. Although the loop filter unit 320 is shown as the loop filter in FIG. 3, in another configuration, the loop filter unit 320 may be implemented as a post loop filter.

Decoded picture buffer

A decoded video block 321 of a picture is then stored in the decoded picture buffer 330. The decoded picture buffer 330 stores a decoded picture 331 as a reference picture, and the reference picture is used for subsequent motion compensation for another picture and/or for separate output and display.
The decoder 30 is configured to output a decoded picture 311, for example, via an output end 312, for presentation or viewing to a user.

Prediction

The inter prediction unit 344 may be identical in function to the inter prediction unit 244 (in particular to the motion compensation unit), and the intra prediction unit 354 may be identical in function to the inter prediction unit 254. The inter prediction unit 344 and the intra prediction unit 354 determine to split or partition and perform prediction based on the partitioning and/or prediction parameter or corresponding information received from the encoded picture data 21 (for example, parsed and/or decoded by the entropy decoding unit 304). The mode application unit 360 may be configured to perform prediction (intra or inter prediction) on each block based on a reconstructed picture or block or a corresponding sample (filtered or unfiltered), to obtain the prediction block 365.
When the video slice is coded as an intra coded (intra coded, I) slice, the intra prediction unit 354 of the mode application unit 360 is configured to generate the prediction block 365 for a picture block of the current video slice based on an indicated intra prediction mode and data from previously decoded blocks of the current picture. When the video picture is coded as an inter coded (that is, B or P) slice, the inter prediction unit 344 (for example, the motion compensation unit) of the mode application unit 360 is configured to generate the prediction block 365 for a video block of the current video slice based on the motion vectors and other syntax elements received from the entropy decoding unit 304. For inter prediction, the prediction blocks may be generated from one reference picture in one reference picture list. The video decoder 30 may construct reference frame lists: a list 0 and a list 1, by using a default construction technology based on reference pictures stored in the DPB 330. The same or similar process may be applied for or by embodiments using tile groups (for example, video tile groups) and/or tiles (for example, video tiles) in addition or alternatively to slices (for example, video slices), for example, a video may be encoded using I, P or B tile groups and/or tiles.
The mode application unit 360 is configured to determine the prediction information for a video block of the current video slice by parsing the motion vectors or other syntax elements, and use the prediction information to generate the prediction block for the current video block being decoded. For example, the mode application unit 360 uses some of the received syntax elements to determine a prediction mode (for example, intra or inter prediction) used to encode the video blocks of the video slice, an inter prediction slice type (for example, a B slice, a P slice, or a GPB slice), construction information for one or more of the reference picture lists for the slice, motion vectors for each inter coded video block of the slice, an inter prediction status for each inter coded video block of the slice, and other information to decode the video blocks in the current video slice. The same or similar process may be applied for or by embodiments using tile groups (for example, video tile groups) and/or tiles (for example, video tiles) in addition or alternatively to slices (for example, video slices), for example, a video may be encoded using I, P or B tile groups and/or tiles.

In an embodiment, the video encoder 30 in FIG. 3 may be further configured to partition and/or decode a picture by using slices (also referred to as video slices), where the picture may be partitioned or decoded by using one or more slices (typically non-overlapping). Each slice may include one or more blocks (for example, CTUs) or one or more groups of blocks (for example, tiles in the H.265/HEVC/VVC standard and bricks in the VVC standard).

In an embodiment, the video decoder 30 shown in FIG. 3 may be further configured to partition and/or decode the picture by using slices/tile groups (also referred to as video tile groups) and/or tiles (also referred to as video tiles). The picture may be partitioned or decoded using one or more slices/tile groups (typically non-overlapping), and each slice/tile group may include, for example, one or more blocks (for example, CTUs) or one or more tiles. Each tile may be of a rectangular shape or another shape, and may include one or more complete or fractional blocks (for example, CTUs).

Other variations of the video decoder 30 may be used to decode the encoded picture data 21. For example, the decoder 30 can generate an output video stream without the loop filter unit 320. For example, a non-transform-based decoder 30 can inverse-quantize the residual signal directly without the inverse transform processing unit 312 for some blocks or frames. In another implementation, the video decoder 30 can have the inverse quantization unit 310 and the inverse transform processing unit 312 combined into a single unit.

It should be understood that, in the encoder 20 and the decoder 30, a processing result of a current step may be further processed and then output to a next step. For example, after interpolation filtering, motion vector derivation, or loop filtering, a further operation, for example, a clip (clip) or shift (shift) operation, may be performed on a processing result of the interpolation filtering, motion vector derivation, or loop filtering.

It should be noted that further operations may be performed on derived motion vectors of the current block (including but not limit to control point motion vectors in an affine mode, sub-block motion vectors in affine, planar, and ATMVP modes, temporal motion vectors, and so on). For example, a value of a motion vector is constrained to a predefined range according to its representing bit. If the representation bit of the motion vector is bitDepth, the range is from $-2^{(bitDepth-1)}$ to $2^{(bitDepth-1)}-1$, where the "^" represents exponentiation. For example, if bitDepth is set to 16, the range is -32768 to 32767; and if bitDepth is set to 18, the range is -131072 to 131071. For example, the value of the derived motion vector (for example, the MVs of four $4\times4$ sub-blocks within one $8\times8$ block) is constrained, so that the maximum difference between integer parts of the four $4\times4$ sub-block MVs is no more than N pixels, such as no more than one pixel. Two methods for constraining the motion vector based on bitDepth are provided herein.

Although video coding is mainly described in the foregoing embodiments, it should be noted that the embodiments of the coding system 10, the encoder 20, and the decoder 30 and other embodiments described in this specification may also be used for still picture processing or coding, that is, processing or coding of a single picture independent of any preceding or consecutive pictures in video coding. In general, if picture processing is limited to a single picture 17, the inter prediction unit 244 (encoder) and the inter prediction unit 344 (decoder) may not be available. All other functions (also referred to as tools or technologies) of the video encoder 20 and the video decoder 30 may also be used for still picture processing, for example, residual calculation 204/304, transform 206, quantization 208, inverse quantization 210/310, (inverse) transform 212/312, partitioning 262/362, intra prediction 254/354, and/or loop filtering 220/320, entropy encoding 270, and entropy decoding 304.

FIG. 5 is an example block diagram of a video coding device 500 according to an embodiment of this application. The video coding device 500 is applicable to implementing the disclosed embodiments described in this specification. In an embodiment, the video coding device 500 may be a decoder such as the video decoder 30 in FIG. 1a or an encoder such as the video encoder 20 in FIG. 1a.

The video coding device 500 includes ingress ports 510 (or input ports 510) and a receiver unit (receiver unit, Rx) 520 for receiving data; a processor, a logic unit, or a central processing unit (central processing unit, CPU) 530 for processing the data, where for example, the processor 530 herein may be a neural network processing unit 530; a transmitter unit (transmitter unit, Tx) 540 and egress ports 550 (or output ports 550) for transmitting the data; and a memory 560 for storing the data. The video coding device 500 may also include optical-to-electrical (optical-to-electrical, OE) components and electrical-to-optical (electrical-to-optical, EO) components coupled to the ingress ports 510, the receiver unit 520, the transmitter unit 540, and the egress ports 550 for egress or ingress of optical or electrical signals.

The processor 530 is implemented by hardware and software. The processor 530 may be implemented as one or more processor chips, cores (for example, a multi-core processor), FPGAs, ASICs, and DSPs. The processor 530 communicates with the ingress ports 510, the receiver unit 520, the transmitter unit 540, the egress ports 550, and the memory 560. The processor 530 includes a coding module 570 (for example, a neural network-based coding module 570). The coding module 570 implements the embodiments disclosed above. For example, the coding module 570 implements, processes, prepares, or provides various coding operations. Therefore, the coding module 570 provides a substantial improvement to functions of the video coding device 500 and affects switching of the video coding device 500 to a different state. Alternatively, the coding module 570 is implemented by using instructions stored in the memory 560 and executed by the processor 530.

The memory 560 may include one or more disks, tape drives, and solid-state drives and may be used as an overflow data storage device, to store programs when such programs are selected for execution, and to store instructions and data that are read during program execution. The memory 560 may be volatile and/or nonvolatile and may be a read-only memory (read-only memory, ROM), a random access memory (random access memory, RAM), a ternary content-addressable memory (ternary content-addressable memory, TCAM), and/or a static random access memory (static random access memory, SRAM).

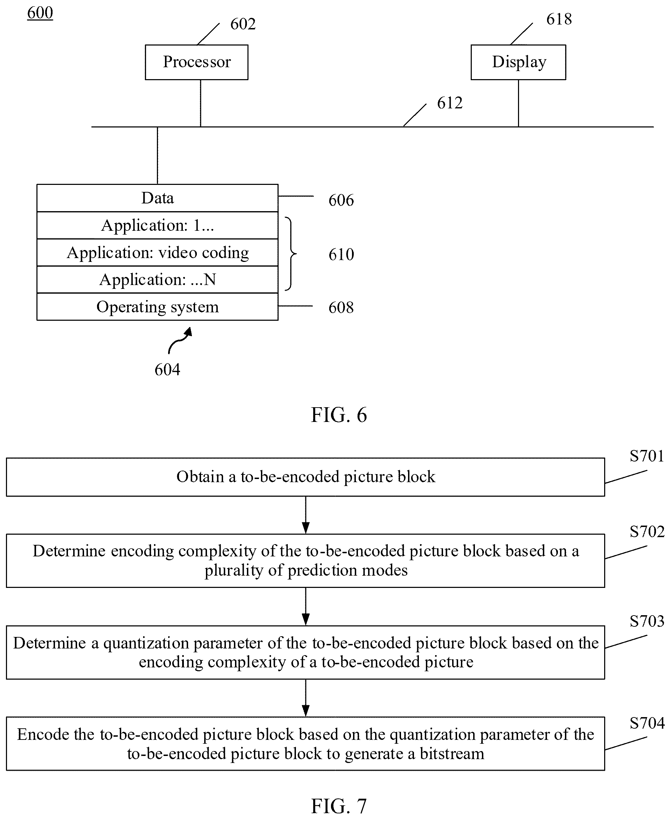

FIG. 6 is an example block diagram of an apparatus 600 according to an embodiment of this application. The apparatus 600 may be used as either or both of the source device 12 and the destination device 14 in FIG. 1a.

A processor 602 in the apparatus 600 may be a central processing unit. Alternatively, the processor 602 may be any other type of device or a plurality of devices, capable of manipulating or processing information existing or to be developed. Although the disclosed implementations can be implemented by using a single processor such as the processor 602 shown in the figure, advantages in speed and efficiency can be achieved by using more than one processor.

In an implementation, a memory 604 in the apparatus 600 may be a read-only memory (ROM) device or a random access memory (RAM) device. Any other appropriate type of storage device may be used as the memory 604. The memory 604 may include code and data 606 that are accessed by the processor 602 through a bus 612. The memory 604 may further include an operating system 608 and an application 610. The application 610 includes at least one program that permits the processor 602 to perform the method described in this specification. For example, the application 610 may include applications 1 to N, and further include a video coding application that performs the method described in this specification.

The apparatus 600 may further include one or more output devices, such as a display 618. In an example, the display 618 may be a touch-sensitive display combined with a display with a touch-sensitive element that can be used to sense a touch input. The display 618 may be coupled to the processor 602 through the bus 612.

Although the bus 612 in the apparatus 600 is described in this specification as a single bus, the bus 612 may include a plurality of buses. Further, a secondary storage may be directly coupled to another component of the apparatus 600 or may be accessed through a network and may include a single integrated unit, for example, a memory card or a plurality of units, for example, a plurality of memory cards. Therefore, the apparatus 600 may have a variety of configurations.

FIG. 7 shows an encoding method according to an embodiment of this application. As shown in FIG. 7, the encoding method may include the following steps.

S701: Obtain a to-be-encoded picture block.

For example, the to-be-encoded picture may be divided into a plurality of consecutive picture blocks (coding blocks), and the to-be-encoded picture block may be any one of the plurality of picture blocks.

S702: Determine encoding complexity of the to-be-encoded picture block based on a plurality of prediction modes.

The plurality of prediction modes include at least one of block-level prediction, point-level prediction, and intra block copy (IBC) prediction, and the encoding complexity indicates encoding difficulty of the to-be-encoded picture block.

In a possible implementation, a prediction operation may be performed on the to-be-encoded picture block based on the plurality of prediction modes to obtain a prediction residual that is of the to-be-encoded picture block and that corresponds to each prediction mode. Then, a target parameter that is of the to-be-encoded picture block and that corresponds to each prediction mode is determined based on the prediction residual. Next, the encoding complexity of the to-be-encoded picture block is determined based on the target parameter.

The target parameter includes at least one of a sum of absolute differences (Sum of Absolute Differences, SAD), a sum of absolute transformed differences (Sum of Absolute Transformed Differences, SATD), or a quantity of lossless coding bits. The prediction operation may be prediction based on an original pixel or a reconstructed pixel.

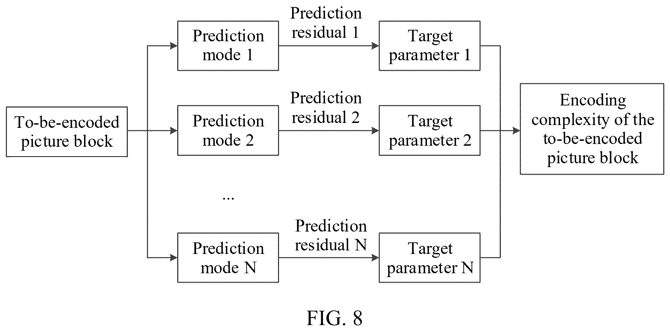

For example, as shown in FIG. 8, the prediction operation may be separately performed on the to-be-encoded picture block through the block-level prediction, point-level prediction, and intra block copy prediction, to obtain a prediction block that is of the to-be-encoded picture block and that corresponds to the block-level prediction, a prediction block that is of the to-be-encoded picture block and that corresponds to the block-level prediction, and a prediction block that is of the to-be-encoded picture block and that corresponds to the intra block copy prediction.

Then, differences between the prediction blocks of the to-be-encoded picture block and an original block of the to-be-encoded picture block are calculated to obtain a prediction residual (a prediction residual 1) that is of the to-be-encoded picture block and that corresponds to the block-level prediction, a prediction residual (a prediction residual 2) that is of the to-be-encoded picture block and that corresponds to the block-level prediction, and a prediction residual (a prediction residual 3) that is of the to-be-encoded picture block and that corresponds to the intra block copy prediction.

Then, the target parameter that is of the to-be-encoded picture block and that corresponds to each prediction mode (the sum of absolute differences, the sum of absolute transformed differences, or the quantity of lossless coding bits) is determined based on the prediction residual. In other words, a target parameter 1 is determined based on the prediction residual 1, a target parameter 2 is determined based on the prediction residual 2, and a target parameter 3 is determined based on the prediction residual 3.

Next, the encoding complexity of the to-be-encoded picture block is determined based on the target parameter that is of the to-be-encoded picture block and that corresponds to each prediction mode.

In a possible implementation, the encoding complexity of the to-be-encoded picture block may be determined based on a target absolute difference, a target sum of absolute transformed differences, or a target quantity of lossless coding bits.

The target absolute difference is a smallest absolute difference in absolute differences that are of the to-be-encoded picture block and that correspond to all prediction modes. The sum of absolute transformed differences is a smallest sum of absolute transformed differences in sums of absolute transformed differences that are of the to-be-encoded picture block and that correspond to all prediction modes. The target quantity of lossless coding bits is a smallest quantity of lossless coding bits in quantities of lossless coding bits that are of the to-be-encoded picture block and that correspond to all prediction modes.

For example, the block-level prediction, point-level prediction, and intra block copy prediction are separately performed on the to-be-encoded picture block to obtain an absolute difference that is of the to-be-encoded picture block and that corresponds to the block-level prediction, an absolute difference that is of the to-be-encoded picture block and that corresponds to the point-level prediction, and an absolute difference that is of the to-be-encoded picture block and that corresponds to the intra block copy prediction. Then, a smallest absolute difference in the absolute difference that corresponds to the block-level prediction, the absolute difference that is of the to-be-encoded picture block and that corresponds to the point-level prediction, and the absolute difference that is of the to-be-encoded picture block and that corresponds to the intra block copy prediction is used as the target absolute difference. Next, the encoding complexity of the to-be-encoded picture block is determined by comparing the target absolute difference with a preset absolute difference value range. The preset absolute difference value range includes a plurality of value ranges, and the plurality of value ranges are in a one-to-one correspondence with a plurality of pieces of encoding complexity (that is, encoding complexity levels).

In a possible implementation, encoding complexity that is of the to-be-encoded picture block and that corresponds to each prediction mode may be determined based on the target parameter that is of the to-be-encoded picture block and that corresponds to each prediction mode. Then, the encoding complexity of the to-be-encoded picture block is determined based on the encoding complexity that is of the to-be-encoded picture block and that corresponds to each prediction mode.

For example, the block-level prediction, point-level prediction, and intra block copy prediction are separately performed on the to-be-encoded picture block to obtain a sum of absolute transformed differences that is of the to-be-encoded picture block and that corresponds to the block-level prediction, a sum of absolute transformed differences that is of the to-be-encoded picture block and that corresponds to the point-level prediction, and a sum of absolute transformed differences that is of the to-be-encoded picture block and that corresponds to the intra block copy prediction.

Then, the sum of absolute transformed differences that is of the to-be-encoded picture block and that corresponds to the block-level prediction, the sum of absolute transformed differences that is of the to-be-encoded picture block and that corresponds to the point-level prediction, and the sum of absolute transformed differences that is of the to-be-encoded picture block and that corresponds to the intra block copy prediction, which are separately obtained through the block-level prediction, point-level prediction, and intra block copy prediction, are compared with a preset value range of the sum of absolute transformed differences, to determine encoding complexity that is of the to-be-encoded picture block and that corresponds to the block-level prediction, encoding complexity that is of the to-be-encoded picture block and that corresponds to the point-level prediction, and encoding complexity that is of the to-be-encoded picture block and that corresponds to the intra block copy prediction. The preset value range of the sum of absolute transformed differences includes a plurality of value ranges, and the plurality of value ranges are in a one-to-one correspondence with a plurality of pieces of encoding complexity (that is, encoding complexity levels).

Next, the encoding complexity that is of the to-be-encoded picture block and that corresponds to the block-level prediction, the encoding complexity that is of the to-be-encoded picture block and that corresponds to the point-level prediction, and the encoding complexity that is of the to-be-encoded picture block and that corresponds to the intra block copy prediction are processed (for example, processed by selecting lowest encoding complexity or performing weighted summation on the encoding complexity), to obtain the encoding complexity (namely, an encoding complexity level) of the to-be-encoded picture block.

In another possible implementation, first encoding complexity of the to-be-encoded picture block may be determined based on the target parameter. The to-be-encoded picture block is divided into a plurality of sub-blocks. A horizontal difference block and a vertical difference block of each of the plurality of sub-blocks are determined. Second encoding complexity of the to-be-encoded picture block is determined based on the horizontal difference block and the vertical difference block of each sub-block. The encoding complexity of the to-be-encoded picture block is determined based on the first encoding complexity and the second encoding complexity.

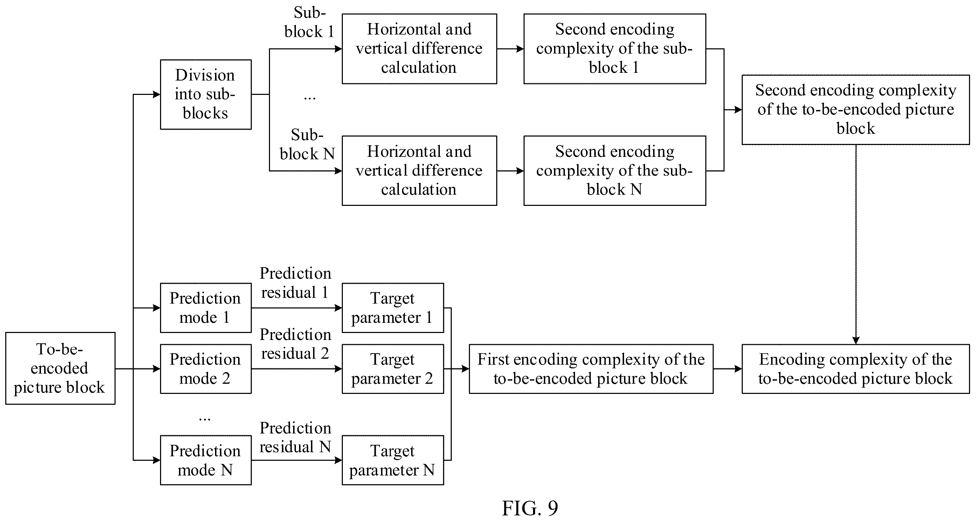

For example, as shown in FIG. 9, the prediction operation may be separately performed on the to-be-encoded picture block through the block-level prediction, point-level prediction, and intra block copy prediction, to obtain a prediction block that is of the to-be-encoded picture block and that corresponds to the block-level prediction, a prediction block that is of the to-be-encoded picture block and that corresponds to the block-level prediction, and a prediction block that is of the to-be-encoded picture block and that corresponds to the intra block copy prediction.

Then, differences between the prediction blocks of the to-be-encoded picture block and an original block of the to-be-encoded picture block are calculated to obtain a prediction residual (a prediction residual 1) that is of the to-be-encoded picture block and that corresponds to the block-level prediction, a prediction residual (a prediction residual 2) that is of the to-be-encoded picture block and that corresponds to the block-level prediction, and a prediction residual (a prediction residual 3) that is of the to-be-encoded picture block and that corresponds to the intra block copy prediction.

Then, the target parameter that is of the to-be-encoded picture block and that corresponds to each prediction mode (the sum of absolute differences, the sum of absolute transformed differences, or the quantity of lossless coding bits) is determined based on the prediction residual.

Next, the first encoding complexity of the to-be-encoded picture block is determined based on the target parameter that is of the to-be-encoded picture block and that corresponds to each prediction mode.

In addition, the to-be-encoded picture block is divided into the plurality of sub-blocks. It is assumed that a size of the to-be-encoded picture block is $W \times H$, where W is a width of the picture block, and H is a height of the picture block. In this embodiment of this application, the to-be-encoded picture block may be divided into N sub-blocks with a size of $(W/N) \times H$.

Then, horizontal and vertical differences are calculated. To be specific, for each sub-block, differences with adjacent pixel values are gradually calculated in a horizontal direction and a vertical direction, to obtain a horizontal difference block and a vertical difference block of the sub-block.

Next, second encoding complexity of each sub-block is calculated. A SAD value is separately calculated for the horizontal difference block and the vertical difference block of each sub-block, to obtain a horizontal complexity value and a vertical complexity value of each sub-block. The horizontal complexity value and the vertical complexity value are separately compared with a preset value range of the sum of absolute differences, to obtain the second encoding complexity (a second encoding complexity level) of the sub-block.

Then, second encoding complexity of the plurality of sub-blocks of the to-be-encoded picture is processed (for example, processed by selecting lowest encoding complexity or performing weighted summation on the encoding complexity) to obtain the second encoding complexity of the to-be-encoded picture.

Finally, the first encoding complexity of the to-be-encoded picture and the second encoding complexity of the to-be-encoded picture are processed (for example, processed by selecting lowest encoding complexity or performing weighted summation on the encoding complexity) to obtain the encoding complexity of the to-be-encoded picture.

In another possible implementation, the to-be-encoded picture block may be divided into a plurality of sub-blocks. A prediction operation is performed on the plurality of sub-blocks based on the plurality of prediction modes to obtain a prediction residual that is of each sub-block and that corresponds to each prediction mode. A target parameter that is of each sub-block and that corresponds to each prediction mode is determined based on the prediction residual, where the target parameter includes at least one of a sum of absolute differences, a sum of absolute transformed differences, or a quantity of lossless coding bits. The encoding complexity of the to-be-encoded picture block is determined based on the target parameter.

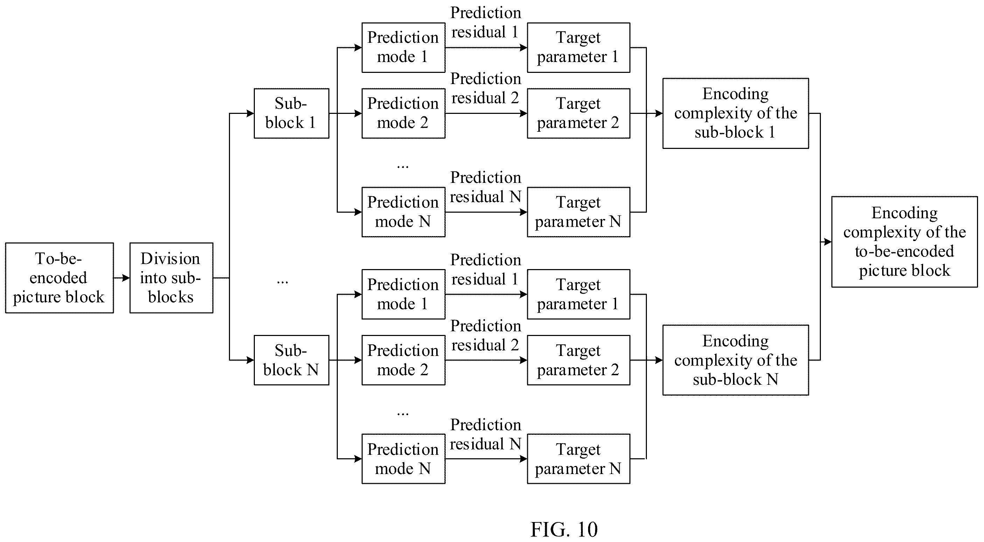

For example, as shown in FIG. 10, the to-be-encoded picture block may be divided into N sub-blocks. The prediction operation is separately performed on each sub-block through the block-level prediction, point-level prediction, and intra block copy prediction, to obtain a prediction residual that is of each sub-block and that corresponds to each prediction mode. The target parameter that is of each sub-block and that corresponds to each prediction mode is determined based on the prediction residual. Finally, the encoding complexity of the to-be-encoded picture block is determined based on the target parameter.

In a possible implementation, encoding complexity of each sub-block may be determined based on the target parameter. The encoding complexity of the to-be-encoded picture block is determined based on the encoding complexity of each sub-block.

For example, the encoding complexity of each sub-block of the to-be-encoded picture may be determined based on the target parameter, and then the encoding complexity of each sub-block is processed (for example, processed by selecting lowest encoding complexity or performing weighted summation on the encoding complexity) to obtain the encoding complexity of the to-be-encoded picture.

In another possible implementation, first encoding complexity of the to-be-encoded picture block may be determined based on the target parameter. Then, a horizontal difference block and a vertical difference block of each of the plurality of sub-blocks are determined. Next, second encoding complexity of the to-be-encoded picture block is determined based on the horizontal difference block and the vertical difference block of each sub-block. The encoding complexity of the to-be-encoded picture block is determined based on the first encoding complexity and the second

EP 4 583 507 A1

encoding complexity.

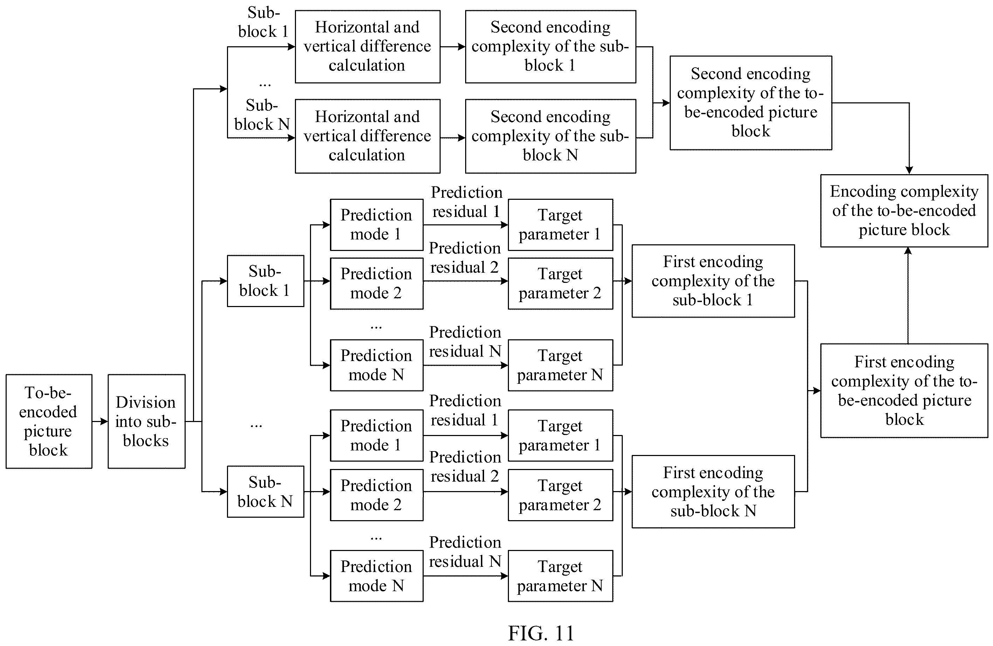

For example, as shown in FIG. 11, the to-be-encoded picture block may be divided into N sub-blocks.

The prediction operation is separately performed on each sub-block through the block-level prediction, point-level prediction, and intra block copy prediction, to obtain a prediction residual that is of each sub-block and that corresponds to each prediction mode.

Then, the target parameter that is of each sub-block and that corresponds to each prediction mode is determined based on the prediction residual.

Finally, the first encoding complexity of the to-be-encoded picture block is determined based on the target parameter.

In addition, horizontal and vertical differences are calculated for each sub-block. To be specific, for each sub-block, differences with adjacent pixel values are gradually calculated in a horizontal direction and a vertical direction, to obtain a horizontal difference block and a vertical difference block of the sub-block.

Next, second encoding complexity of each sub-block is calculated. A SAD value is separately calculated for the horizontal difference block and the vertical difference block of each sub-block, to obtain a horizontal complexity value and a vertical complexity value of each sub-block. The horizontal complexity value and the vertical complexity value are separately compared with a preset value range of the sum of absolute differences, to obtain the second encoding complexity (a second encoding complexity level) of the sub-block.

Then, second encoding complexity of the plurality of sub-blocks of the to-be-encoded picture is processed (for example, processed by selecting lowest encoding complexity or performing weighted summation on the encoding complexity) to obtain the second encoding complexity of the to-be-encoded picture.

Finally, the first encoding complexity of the to-be-encoded picture and the second encoding complexity of the to-be-encoded picture are processed (for example, processed by selecting lowest encoding complexity or performing weighted summation on the encoding complexity) to obtain the encoding complexity of the to-be-encoded picture.

In a possible implementation, that the to-be-encoded picture block is divided into a plurality of sub-blocks may be specifically as follows: It is assumed that a size of a current picture block (that is, the to-be-encoded picture) is $W \times H$, where W is a width of the picture block, and H is a height of the picture block. In this embodiment, the picture block is first divided into two small blocks with a size of $(W/2) \times (H)$. From left to right, the first sub-block is referred to as a left small block, and the second sub-block is referred to as a right small block. For a picture block in a non-first column of a slice, a left small block and a right small block of the picture block are separately divided into N/2 sub-blocks with a size of $(W/N) \times H$. For a picture block in a first column and a non-first row of the slice, when H>1, a left small block and a right small block of the picture block are separately divided into N/2 sub-blocks with a size of $(2*W/N) \times (H/2)$; and when H=1, the left small block and the right small block of the picture block are separately divided into N/4 sub-blocks with a size of $(2*W/N) \times H$. For a picture block in a first row and the first column of the slice, only a right small block of the picture block is divided into N/2 sub-blocks with a size of $(W/N) \times H$, that is, in this case, a sub-block is obtained by dividing only the right small block.

Optionally, the IBC prediction mode includes an IBC prediction mode applied to a picture block in a first column and a non-first row of a slice, an IBC prediction mode applied to a picture block in a non-first column of a slice, and an IBC prediction mode applied to a picture block in a first row and a first column of a slice.

Search areas for the three IBC modes are specified as follows:

When a picture block is in a non-first column of a slice, search areas of N/2 sub-blocks with a size of $(W/N) \times H$ of a left small block are an $S \times H$ area on the left of the current left small block with a size of $(W/2) \times (H)$. Search areas of N/2 sub-blocks with a size of $(W/N) \times H$ of a right small block is an $S \times H$ area on the left of the current right small block with a size of $(W/2) \times (H)$.

When a picture block is in a first column and a non-first row of a slice, and H>1, search areas of N/2 sub-blocks with a size of $(2*W/N) \times (H/2)$ of a left small block and a right small block are an $L \times (H/2)$ area in an upper row of the current picture block; and when H=1, search areas of N/4 sub-blocks with a size of $(2*W/N) \times H$ of the left small block and the right small block are an $L \times 1$ area in an upper row of the current picture block.

When a picture block is located in a first row and a first column of a slice, search areas of N/2 sub-blocks with a size of $(W/N) \times H$ of a right small block is a $(W/2) \times H$ area on the left of the current right small block with a size of $(P) \times (H)$.

Widths (namely, S, L, or P) of search areas of sub-blocks may be the same, may be different, or may be partially the same, and may be adjusted based on an actual location of a current sub-block. In this embodiment, a matching criterion for searching for an optimal matched block in a search area is a minimized SAD, that is, in the search area, a matched block with a smallest sum of absolute values of differences from an original value of a pixel at a corresponding location in a current sub-block is an optimal matched block. For a matched block, a SAD may be obtained by calculating a difference between an original pixel value and an original pixel value of a current sub-block, or a SAD may be obtained by calculating a difference between a reconstructed pixel value and an original pixel value of a current sub-block.

In this embodiment, a picture block complexity level 1 is obtained by performing a rule-based operation on

27

complexity of the N sub-blocks. A specific process is as follows:

1. Calculate group complexity. N or N/2 pieces of complexity are divided into GN groups at a fixed interval step, where GN=N/step or N/(2*step). A sum of pieces of complexity of sub-blocks in each group is calculated and used as group complexity.

2. Calculate the first encoding complexity (encoding complexity level) of the picture block. The encoding complexity (encoding complexity level) of the picture block may be classified into CL types. The group complexity of each group is compared with an agreed threshold, and the first encoding complexity of the picture block is derived from the CL types of encoding complexity (encoding complexity levels).

Optionally, in this embodiment of this application, the encoding complexity of the picture block may be classified into five levels: 0, 1, 2, 3, and 4.

For example, the encoding complexity of the picture block may be obtained according to the following rule.

When the picture block is in a first row and also a first column of a slice:

if, when group complexity of each of GN groups is less than a low complexity threshold TL, the first encoding complexity is set to 0.

Otherwise, when the group complexity of each of the GN groups is less than a medium complexity threshold TM, the first encoding complexity is set to 1.

Otherwise, the first encoding complexity is set to 2.

Otherwise:

if, when the group complexity of each of the GN groups is less than the low complexity threshold TL, the first encoding complexity is set to 0.

Otherwise, when group complexity of each of 3/4 of the GN groups is less than the low complexity threshold TL, and group complexity of each of the remaining groups is less than the medium complexity threshold TM, the first encoding complexity is set to 1.

Otherwise, when the group complexity of each of 3/4 of the GN groups is less than the low complexity threshold TL, and the group complexity of each of the remaining groups is less than a high complexity threshold TH, the first encoding complexity is set to 2.

Otherwise, when the group complexity of each of 3/4 of the GN groups is less than the low complexity threshold TL, and the group complexity of each of the remaining groups is greater than the high complexity threshold TH, the first encoding complexity is set to 3.

Otherwise, when group complexity of each of 2/4 or less of the GN groups is less than the low complexity threshold TL, and group complexity of each of the remaining groups is less than the medium complexity threshold TM, the first encoding complexity is set to 2.

Otherwise, when the group complexity of each of 2/4 or less of the GN groups is less than the low complexity threshold TL, and the group complexity of each of the remaining groups is less than the high complexity threshold TH, the first encoding complexity is set to 3.

Otherwise, when the group complexity of each of 2/4 or less of the GN groups is less than the low complexity threshold TL, and the group complexity of each of the remaining groups is greater than the high complexity threshold TH, the first encoding complexity is set to 4.

S703: Determine a quantization parameter of the to-be-encoded picture block based on the encoding complexity of a to-be-encoded picture.

It should be noted that the quantization parameter of the to-be-encoded picture block may be determined based on the encoding complexity of the to-be-encoded picture by using any specific method that can be figured out by a person skilled in the art. This is not specifically limited in this embodiment of this application.

For example, the quantization parameter of the to-be-encoded picture block may be determined based on the encoding complexity of the to-be-encoded picture according to the following procedure.

Step 1: Calculate buffer fullness.

The buffer fullness may be calculated by extracting physical buffer fullness PhyBufT at a specified moment T from a physical buffer fullness record array, where the physical buffer fullness record array stores an amount of data in a physical buffer during previous encoding or decoding of coding blocks. Buffer fullness RcBufT=PhyBufT+X0 is calculated, where X0 is an agreed parameter. Finally, a process of calculating buffer fullness F is as follows: F=RcBufT/RcBufMAX, where RcBufMAX is a maximum value of a buffer.

Step 2: Calculate an expected quantity of block bits. The expected quantity Bpp of block bits represents expected coding bits of the current coding block without considering picture content.

A process of calculating the expected quantity of block bits may be as follows: Bpp=8*BppINI+BppADJ. BppINI is an initial value of the expected quantity, and is obtained by multiplying an original quantity of bits of an input picture block by a target compression ratio. BppADJ is an adjustment value of the expected quantity, which is in proportional to (RcBufEND-RcBufT). RcBufEND is expected buffer fullness at the end of the encoding or decoding process, and RcBufT is the buffer fullness obtained in the step 1.

In a possible manner, the expected quantity of block bits may not be calculated.

Step 3: Calculate an information ratio. The information ratio R represents a ratio of information reserved in a quantized coding block to that in an original coding block.

A process of calculating the information ratio is as follows:

(1) Calculate a bit offset bitsOffset, where bitsOffset=BitsOffset-X1*bpp+X2, BitsOffset is an initial value of the bit offset, and X1 and X2 are agreed parameters.

(2) Obtain an average lossless coding bit BAVG at the moment T by querying an average lossless coding bit record array.

(3) Calculate the information ratio R=(Bpp*InvTab[X3*BAVG-bitsOffset1]+X4)*X5.

Bpp is the expected quantity of block bits obtained in the step 2, InvTab is an agreed parameter table, and X3, X4, and X5 are agreed parameters.

Step 4: Obtain a quantity of lossless coding bits. The quantity BLL of lossless coding bits represents an estimated value of a quantity of coding bits of an unquantized coding block.

Specifically, the quantity of lossless coding bits may be obtained by querying a record array RecordBLL of quantities of lossless coding bits, where BLL=RecordBLL[T] [k], T represents a specified moment, and k represents encoding complexity (namely, an encoding complexity level) of an input picture block.

Step 5: Calculate a target quantity of bits. The target quantity BTGT of bits represents a quantity of bits that should be obtained by using a bit rate control module for the coding block.

The target quantity BTGT of bits is calculated as follows: BTGT=(R*(BLL-bitsOffset)+X6)*X7.

R is the information ratio obtained in the step 3, BLL is the quantity of lossless coding bits obtained in the step 4, bitsOffset is the bit offset calculated in the step 3, and X6 and X7 are agreed parameters.

Step 6: Clamp the target quantity of bits.

For example, a minimum target bit BMIN and a maximum target bit BMAX may be calculated based on the expected quantity Bpp of block bits, the quantity BLL of lossless coding bits, and the buffer fullness F, and the target quantity BTGT of bits is clamped based on the range. The target quantity BTGT of bits may be BTGT=MIN(MAX(BMIN, BTGT), BMAX).

In a possible manner, the target quantity of bits may not be clamped.

Step 7: Calculate a quantization parameter.

The quantization parameter QP may satisfy QP=(BLL-(BTGT+X8)*X9)*X10.

BLL is the quantity of lossless coding bits obtained in the step 4, BTGT is the target quantity of bits obtained in the step 5, and X8, X9, and X10 are agreed parameters.

S704: Encode the to-be-encoded picture block based on the quantization parameter of the to-be-encoded picture block to generate a bitstream.

For example, after the to-be-encoded picture block is first input into an encoder, a coding picture block is predicted, and then the to-be-encoded picture block is quantized based on the quantization parameter of the to-be-encoded picture block. Next, entropy encoding is performed on the to-be-encoded picture block to obtain the bitstream corresponding to the to-be-encoded picture block. Next, bitstreams corresponding to all coding picture blocks obtained by dividing the to-be-encoded picture may be connected in series, to obtain a bitstream corresponding to the to-be-encoded picture. The coding picture block is any picture block in a plurality of picture blocks obtained by dividing the to-be-encoded picture block.

It should be noted that the quantization parameter used in an encoding process directly affects picture quality of a picture obtained through decoding. The quantization parameter is adjusted based on the encoding complexity of the picture, so that the picture quality of the picture obtained through decoding can be improved. However, in a related technology, encoding complexity of a picture is calculated based on horizontal and vertical gradients of the picture. For a weak directional prediction mode, a gradient calculation result is far different from a prediction difference of the weak directional prediction mode. In this case, encoding complexity calculated based on the gradients is far different from actual encoding complexity of an actual current coding block (picture block) in an optimal prediction mode. As a result, a derived quantization parameter is inaccurate, and the picture quality is affected. However, in this embodiment of this application, the encoding complexity of the to-be-encoded picture block is determined based on the plurality of prediction modes. Regardless of whether the optimal prediction mode of the current picture block is a strong directional prediction mode or the weak directional prediction mode, the encoding complexity of the picture block can be accurately obtained based on prediction effect of the plurality of prediction modes, thereby improving accuracy of the encoding complexity of the picture block. Improving the accuracy of the encoding complexity can make the quantization parameter obtained based on the encoding complexity more accurate. Because accuracy of the quantization parameter is positively correlated with the picture quality of the picture obtained through decoding, improved accuracy of the quantization parameter corresponding-ingly enhances the picture quality of the picture obtained through decoding.

In a possible implementation, after the to-be-encoded picture block is encoded based on the quantization parameter to generate the bitstream, a bit rate control parameter may be further updated based on a quantity of coding bits of the to-be-encoded picture block. The bit rate control parameter includes at least one of a record table of quantities of average lossless coding bits, a record table of quantities of lossless coding bits, a physical buffer fullness record table, or a record table location.

It should be noted that the bit rate control parameter may be updated based on the quantity of coding bits of the to-be-encoded picture block by using any specific method that can be figured out by a person skilled in the art. This is not specifically limited in this embodiment of this application.

For example, the bit rate control parameter may be updated based on the quantity of coding bits of the to-be-encoded picture block according to the following procedure.

Procedure 1: Calculate the quantity of lossless coding bits.

A method for calculating the quantity BLC of lossless coding bits may be as follows:

$$BLC=((4*BCU+8*QP+X11)+X8)*X9.$$

BCU is a quantity of actual coding bits obtained after a current coding block (namely, the to-be-encoded picture block) is encoded or decoded, and QP is a quantization parameter used for the current block (namely, the to-be-encoded picture block). X8, X9, and X11 are agreed parameters.

Procedure 2: Calculate a record table location.

A record table location TCUR represents a moment of the current coding block, a record table location TPRE represents a moment of a previous coding block, and TPRE=(TCUR+N-1) %N, where N is an interval value between a coding block to which a quantity of coding bits in a bit rate control input belongs and a picture block to which picture block encoding complexity (an encoding complexity level) belongs.

Procedure 3: Update the record table of quantities of average lossless coding bits.

In the record table of quantities of average lossless coding bits, RecordBAVG is an array whose length is N, and RecordBAVG[t] represents a value at a $t^{th}$ location. RecordBAVG[TCUR]=(RecordBAVG[TPRE]+X12*BLC)*X13.

TCUR and TPRE are the record table locations calculated in the procedure 2. BLC is the quantity of lossless coding bits calculated in the procedure 1. X12 and X13 are agreed parameters.

Procedure 4: Update the record table of quantities of lossless coding bits.

The record table RecordBLL of quantities of lossless coding bits is a two-dimensional array whose size is N*K. RecordBLL[t][k] represents a value that is at the $t^{th}$ location and whose picture block encoding complexity (encoding complexity level) is k.

$$RecordBLL[TCUR][k]=(RecordBLL[TPRE][k]*(8–X14)+BLC*X14+4)*X15.$$

TCUR and TPRE are the record table locations calculated in the procedure 2. BLC is the quantity of lossless coding bits calculated in the procedure 1. X14 and X15 are agreed parameters.

Procedure 5: Update the physical buffer fullness record table.

The physical buffer fullness record table RecordPHY is an array whose length is N, and RecordPHY[t] represents a value at the $t^{th}$ location. A value of RecordPHY[TCUR] is updated to an actual value of current physical buffer fullness.

Procedure 6: Update a record table location.

An update method may be as follows: TCUR=(TCUR+1)%N.

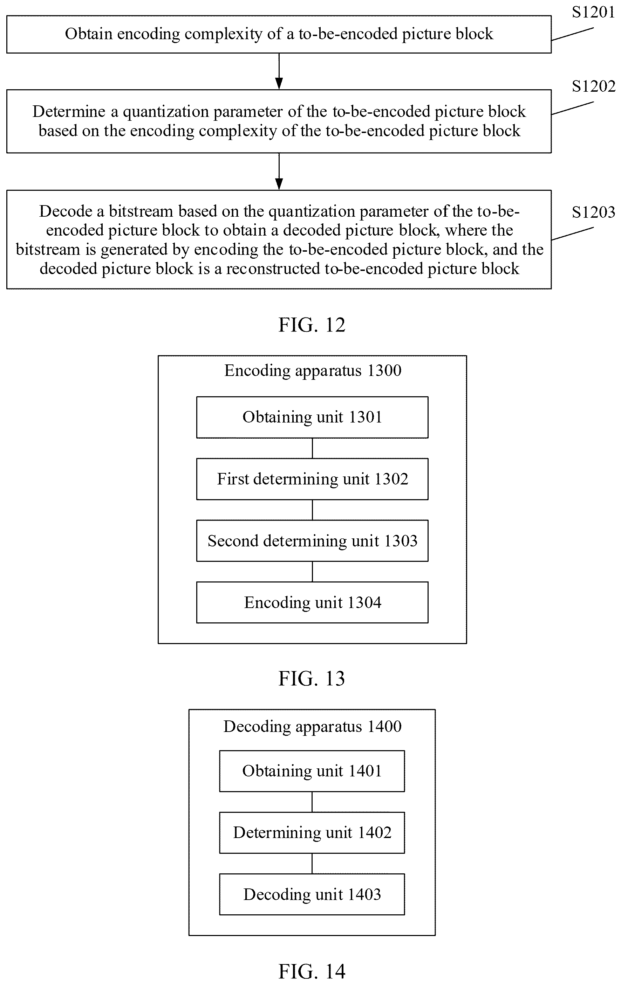

FIG. 12 shows a decoding method according to an embodiment of this application. As shown in FIG. 12, the decoding method may include the following steps.

S1201: Obtain encoding complexity of a to-be-encoded picture block.

In a possible implementation, entropy decoding can be performed on a bitstream to obtain the encoding complexity. The bitstream is generated by encoding the to-be-encoded picture block.

In another possible implementation:

S1202: Determine a quantization parameter of the to-be-encoded picture block based on the encoding complexity of the to-be-encoded picture block.

In a possible implementation, a prediction operation may be performed on the to-be-encoded picture block based on the plurality of prediction modes to obtain a prediction residual that is of the to-be-encoded picture block and that corresponds to each prediction mode. A target parameter that is of the to-be-encoded picture block and that corresponds to each prediction mode is determined based on the prediction residual, where the target parameter includes at least one of a sum of absolute differences, a sum of absolute transformed differences, or a quantity of lossless coding bits. The encoding complexity of the to-be-encoded picture block is determined based on the target parameter.

In a possible implementation, first encoding complexity of the to-be-encoded picture block is determined based on the target parameter. The to-be-encoded picture block is divided into a plurality of sub-blocks. A horizontal difference block and a vertical difference block of each of the plurality of sub-blocks are determined. Second encoding complexity of the to-be-encoded picture block is determined based on the horizontal difference block and the vertical difference block of each sub-block. The encoding complexity of the to-be-encoded picture block is determined based on the first encoding complexity and the second encoding complexity.

In a possible implementation, the encoding complexity of the to-be-encoded picture block is determined based on a target absolute difference, a target sum of absolute transformed differences, or a target quantity of lossless coding bits. The target absolute difference is a smallest absolute difference in absolute differences that are of the to-be-encoded picture block and that correspond to all prediction modes. The sum of absolute transformed differences is a smallest sum of absolute transformed differences in sums of absolute transformed differences that are of the to-be-encoded picture block and that correspond to all prediction modes. The target quantity of lossless coding bits is a smallest quantity of lossless coding bits in quantities of lossless coding bits that are of the to-be-encoded picture block and that correspond to all prediction modes.

In a possible implementation, the to-be-encoded picture block is divided into a plurality of sub-blocks. A prediction operation is performed on the plurality of sub-blocks based on the plurality of prediction modes to obtain a prediction residual that is of each sub-block and that corresponds to each prediction mode. A target parameter that is of each sub-block and that corresponds to each prediction mode is determined based on the prediction residual, where the target parameter includes at least one of a sum of absolute differences, a sum of absolute transformed differences, or a quantity of lossless coding bits. The encoding complexity of the to-be-encoded picture block is determined based on the target parameter.

In a possible implementation, encoding complexity of each sub-block is determined based on the target parameter. The encoding complexity of the to-be-encoded picture block is determined based on the encoding complexity of each sub-block.

In a possible implementation, first encoding complexity of the to-be-encoded picture block is determined based on the target parameter. A horizontal difference block and a vertical difference block of each of the plurality of sub-blocks are determined. Second encoding complexity of the to-be-encoded picture block is determined based on the horizontal difference block and the vertical difference block of each sub-block. The encoding complexity of the to-be-encoded picture block is determined based on the first encoding complexity and the second encoding complexity.

For a specific implementation of S1202, refer to S702. Details are not described herein again.

S1203: Decode the bitstream based on the quantization parameter of the to-be-encoded picture block to obtain a decoded picture block.

The bitstream is generated by encoding the to-be-encoded picture block. The decoded picture block is a reconstructed to-be-encoded picture block.

For example, entropy decoding may be performed on the bitstream to obtain the quantization parameter of the to-be-encoded picture block. Then the bitstream is dequantized based on the quantization parameter of the to-be-encoded picture block. Next, a decoding operation is performed on the bitstream. Finally, the constructed to-be-encoded picture block is output.

The following describes, with reference to FIG. 13, an encoding apparatus configured to perform the foregoing encoding method.

It may be understood that, to implement the foregoing function, the encoding apparatus includes a corresponding hardware and/or software module for performing the function. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of the embodiments of this application.

In embodiments of this application, the encoding apparatus may be divided into functional modules based on the foregoing method examples. For example, each functional module may be obtained through division based on each corresponding function, or two or more functions may be integrated into one processing module. The integrated module may be implemented in a form of hardware. It should be noted that module division in embodiments is an example and is merely logical function division. In practice, there may be another division manner.

When each functional module is obtained through division based on each corresponding function, FIG. 13 is a possible composition diagram of the encoding apparatus in the foregoing embodiments. As shown in FIG. 13, the encoding apparatus 1300 may include an obtaining unit 1301, a first determining unit 1302, a second determining unit 1303, and an encoding unit 1304.

The obtaining unit 1301 is configured to obtain a to-be-encoded picture block.

The first determining unit 1302 is configured to determine encoding complexity of the to-be-encoded picture block based on a plurality of prediction modes, where the plurality of prediction modes include at least one of block-level prediction, point-level prediction, and intra block copy prediction, and the encoding complexity indicates encoding difficulty of the to-be-encoded picture block.

The second determining unit 1303 is configured to determine a quantization parameter of the to-be-encoded picture block based on the encoding complexity.

The encoding unit 1304 is configured to encode the to-be-encoded picture block based on the quantization parameter to generate a bitstream.

In a possible implementation, the first determining unit 1302 is specifically configured to: perform a prediction operation on the to-be-encoded picture block based on the plurality of prediction modes to obtain a prediction residual that is of the to-be-encoded picture block and that corresponds to each prediction mode; determine, based on the prediction residual, a target parameter that is of the to-be-encoded picture block and that corresponds to each prediction mode, where the target parameter includes at least one of a sum of absolute differences, a sum of absolute transformed differences, or a quantity of lossless coding bits; and determine the encoding complexity of the to-be-encoded picture block based on the target parameter.

In a possible implementation, the first determining unit 1302 is specifically configured to: determine first encoding complexity of the to-be-encoded picture block based on the target parameter; divide the to-be-encoded picture block into a plurality of sub-blocks; determine a horizontal difference block and a vertical difference block of each of the plurality of sub-blocks; determine second encoding complexity of the to-be-encoded picture block based on the horizontal difference block and the vertical difference block of each sub-block; and determine the encoding complexity of the to-be-encoded picture block based on the first encoding complexity and the second encoding complexity.

In a possible implementation, the first determining unit 1302 is specifically configured to determine the encoding complexity of the to-be-encoded picture block based on a target absolute difference, a target sum of absolute transformed differences, or a target quantity of lossless coding bits. The target absolute difference is a smallest absolute difference in absolute differences that are of the to-be-encoded picture block and that correspond to all prediction modes. The sum of absolute transformed differences is a smallest sum of absolute transformed differences in sums of absolute transformed differences that are of the to-be-encoded picture block and that correspond to all prediction modes. The target quantity of lossless coding bits is a smallest quantity of lossless coding bits in quantities of lossless coding bits that are of the to-be-encoded picture block and that correspond to all prediction modes.

In a possible implementation, the first determining unit 1302 is specifically configured to: divide the to-be-encoded picture block into a plurality of sub-blocks; perform a prediction operation on the plurality of sub-blocks based on the plurality of prediction modes to obtain a prediction residual that is of each sub-block and that corresponds to each prediction mode; determine, based on the prediction residual, a target parameter that is of each sub-block and that corresponds to each prediction mode, where the target parameter includes at least one of a sum of absolute differences, a sum of absolute transformed differences, or a quantity of lossless coding bits; and determine the encoding complexity of the to-be-encoded picture block based on the target parameter.

In a possible implementation, the first determining unit 1302 is specifically configured to: determine encoding complexity of each sub-block based on the target parameter; and determine the encoding complexity of the to-be-encoded picture block based on the encoding complexity of each sub-block.

In a possible implementation, the first determining unit 1302 is specifically configured to: determine first encoding complexity of the to-be-encoded picture block based on the target parameter; determine a horizontal difference block and a vertical difference block of each of the plurality of sub-blocks; determine second encoding complexity of the to-be-encoded picture block based on the horizontal difference block and the vertical difference block of each sub-block; and determine the encoding complexity of the to-be-encoded picture block based on the first encoding complexity and the second encoding complexity.

In a possible implementation, the encoding unit 1304 is further configured to encode the encoding complexity into the bitstream.

The following describes, with reference to FIG. 14, a decoding apparatus configured to perform the decoding method.

It may be understood that, to implement the foregoing function, the decoding apparatus includes a corresponding hardware and/or software module for performing the function. With reference to the example algorithm steps described in embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of the embodiments of this application.

In embodiments of this application, the decoding apparatus may be divided into functional modules based on the foregoing method examples. For example, each functional module may be obtained through division based on each corresponding function, or two or more functions may be integrated into one processing module. The integrated module may be implemented in a form of hardware. It should be noted that module division in embodiments is an example and is merely logical function division. In practice, there may be another division manner.

When each functional module is obtained through division based on each corresponding function, FIG. 14 is a possible composition diagram of the decoding apparatus in the foregoing embodiments. As shown in FIG. 14, the decoding apparatus 1400 may include an obtaining unit 1401, a determining unit 1402, and a decoding unit 1403.

The obtaining unit 1401 is configured to obtain encoding complexity of a to-be-encoded picture block, where the encoding complexity indicates encoding difficulty of the to-be-encoded picture block, the encoding complexity is determined by a plurality of prediction modes, and the plurality of prediction modes include at least one of block-level prediction, point-level prediction, and intra block copy prediction.

The determining unit 1402 is configured to determine a quantization parameter of the to-be-encoded picture block based on the encoding complexity.

The decoding unit 1403 is configured to decode a bitstream based on the quantization parameter to obtain a decoded picture block, where the bitstream is generated by encoding the to-be-encoded picture block, and the decoded picture block is a reconstructed to-be-encoded picture block.

In a possible implementation, the obtaining unit 1401 is specifically configured to perform entropy decoding on the bitstream to obtain the encoding complexity.

In a possible implementation, the obtaining unit 1401 is specifically configured to: perform a prediction operation on the to-be-encoded picture block based on the plurality of prediction modes to obtain a prediction residual that is of the to-be-encoded picture block and that corresponds to each prediction mode; determine, based on the prediction residual, a target parameter that is of the to-be-encoded picture block and that corresponds to each prediction mode, where the target parameter includes at least one of a sum of absolute differences, a sum of absolute transformed differences, or a quantity of lossless coding bits; and determine the encoding complexity of the to-be-encoded picture block based on the target parameter.

In a possible implementation, the obtaining unit 1401 is specifically configured to: determine first encoding complexity of the to-be-encoded picture block based on the target parameter; divide the to-be-encoded picture block into a plurality of sub-blocks; determine a horizontal difference block and a vertical difference block of each of the plurality of sub-blocks; determine second encoding complexity of the to-be-encoded picture block based on the horizontal difference block and the vertical difference block of each sub-block; and determine the encoding complexity of the to-be-encoded picture block based on the first encoding complexity and the second encoding complexity.

In a possible implementation, the obtaining unit 1401 is specifically configured to determine the encoding complexity of the to-be-encoded picture block based on a target absolute difference, a target sum of absolute transformed differences, or a target quantity of lossless coding bits. The target absolute difference is a smallest absolute difference in absolute differences that are of the to-be-encoded picture block and that correspond to all prediction modes. The sum of absolute transformed differences is a smallest sum of absolute transformed differences in sums of absolute transformed differences that are of the to-be-encoded picture block and that correspond to all prediction modes. The target quantity of lossless coding bits is a smallest quantity of lossless coding bits in quantities of lossless coding bits that are of the to-be-encoded picture block and that correspond to all prediction modes.

In a possible implementation, the obtaining unit 1401 is specifically configured to: divide the to-be-encoded picture block into a plurality of sub-blocks; perform a prediction operation on the plurality of sub-blocks based on the plurality of prediction modes to obtain a prediction residual that is of each sub-block and that corresponds to each prediction mode; determine, based on the prediction residual, a target parameter that is of each sub-block and that corresponds to each prediction mode, where the target parameter includes at least one of a sum of absolute differences, a sum of absolute transformed differences, or a quantity of lossless coding bits; and determine the encoding complexity of the to-be-encoded picture block based on the target parameter.

In a possible implementation, the obtaining unit 1401 is specifically configured to: determine encoding complexity of each sub-block based on the target parameter; and determine the encoding complexity of the to-be-encoded picture block based on the encoding complexity of each sub-block.

In a possible implementation, the obtaining unit 1401 is specifically configured to: determine first encoding complexity of the to-be-encoded picture block based on the target parameter; determine a horizontal difference block and a vertical difference block of each of the plurality of sub-blocks; determine second encoding complexity of the to-be-encoded picture block based on the horizontal difference block and the vertical difference block of each sub-block; and determine the encoding complexity of the to-be-encoded picture block based on the first encoding complexity and the second encoding complexity.

An embodiment of this application further provides an encoding apparatus. The apparatus includes at least one processor. When the at least one processor executes program code or instructions, the foregoing related method steps are implemented to implement the encoding method in the foregoing embodiment.

Optionally, the apparatus may further include at least one memory, and the at least one memory is configured to store the program code or the instructions.

An embodiment of this application further provides a decoding apparatus. The apparatus includes at least one processor. When the at least one processor executes program code or instructions, the foregoing related method steps are implemented to implement the decoding method in the foregoing embodiment.

Optionally, the apparatus may further include at least one memory, and the at least one memory is configured to store the program code or the instructions.

An embodiment of this application further provides a computer storage medium. The computer storage medium stores computer instructions. When the computer instructions are run on an encoding apparatus, the encoding apparatus is enabled to perform the foregoing related method steps to implement the encoding and decoding methods in the foregoing embodiments.

An embodiment of this application further provides a computer program product. When the computer program product runs on a computer, the computer is enabled to perform the foregoing related steps, to implement the encoding and decoding methods in the foregoing embodiments.

An embodiment of this application further provides an encoding and decoding apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute the instructions, so that the chip performs the encoding and decoding methods in the foregoing method embodiments.

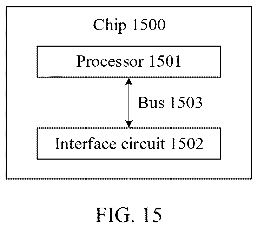

FIG. 15 is a diagram of a structure of a chip 1500. The chip 1500 includes one or more processors 1501 and an interface circuit 1502. Optionally, the chip 1500 may further include a bus 1503.

The processor 1501 may be an integrated circuit chip and has a signal processing capability. In an implementation process, the steps of the foregoing encoding method and the decoding method may be implemented by using an integrated logic circuit of hardware in the processor 1501, or by using instructions in a form of software.

Optionally, the processor 1501 may be a general-purpose processor, a digital signal processor (digital signal processing, DSP), an application-specific integrated circuit (application specific integrated circuit, ASIC), a field programmable gate array (field-programmable gate array, FPGA) or another programmable logic device, a discrete gate or a transistor logic device, or a discrete hardware component. The processor 1501 may implement or perform the methods and steps that are disclosed in embodiments of this application. The general-purpose processor may be a microprocessor, or the processor may be any conventional processor or the like.

The interface circuit 1502 may be configured to send or receive data, instructions, or information. The processor 1501 may perform processing by using data, instructions, or other information received by the interface circuit 1502, and may send processed information by using the interface circuit 1502.

Optionally, the chip further includes a memory. The memory may include a read-only memory and a random access memory, and provide operation instructions and data for the processor. A part of the memory may further include a non-volatile random access memory (non-volatile random access memory, NVRAM).

Optionally, the memory stores an executable software module or a data structure, and the processor may perform a corresponding operation by invoking operation instructions stored in the memory (the operation instructions may be stored in an operating system).

Optionally, the chip may be used in the encoding apparatus or a DOP in embodiments of this application. Optionally, the interface circuit 1502 may be configured to output an execution result of the processor 1501. For the encoding and decoding methods provided in one or more of embodiments of this application, refer to the foregoing embodiments. Details are not described herein again.

It should be noted that functions corresponding to the processor 1501 and the interface circuit 1502 may be implemented by using a hardware design, or may be implemented by using a software design, or may be implemented by using a combination of software and hardware. This is not limited herein.

The apparatus, the computer storage medium, the computer program product, or the chip provided in embodiments are all configured to perform the corresponding methods provided above. Therefore, for beneficial effect that can be achieved by the apparatus, the computer storage medium, the computer program product, or the chip, refer to beneficial effect of the corresponding methods provided above. Details are not described herein again.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or a compact disc.

The foregoing descriptions are merely specific implementations of embodiments of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. An encoding method, comprising:

   obtaining a to-be-encoded picture block;
   determining encoding complexity of the to-be-encoded picture block based on a plurality of prediction modes, wherein the plurality of prediction modes comprise at least one of block-level prediction, point-level prediction, and intra block copy prediction, and the encoding complexity indicates encoding difficulty of the to-be-encoded picture block;
   determining a quantization parameter of the to-be-encoded picture block based on the encoding complexity; and
   encoding the to-be-encoded picture block based on the quantization parameter to generate a bitstream.

2. The method according to claim 1, wherein the determining encoding complexity of the to-be-encoded picture block based on a plurality of prediction modes comprises:

   performing a prediction operation on the to-be-encoded picture block based on the plurality of prediction modes to obtain a prediction residual that is of the to-be-encoded picture block and that corresponds to each prediction mode;
   determining, based on the prediction residual, a target parameter that is of the to-be-encoded picture block and that corresponds to each prediction mode, wherein the target parameter comprises at least one of a sum of absolute differences, a sum of absolute transformed differences, or a quantity of lossless coding bits; and
   determining the encoding complexity of the to-be-encoded picture block based on the target parameter.

3. The method according to claim 2, wherein the determining the encoding complexity of the to-be-encoded picture block based on the target parameter comprises:

> determining first encoding complexity of the to-be-encoded picture block based on the target parameter;
> dividing the to-be-encoded picture block into a plurality of sub-blocks;
> determining a horizontal difference block and a vertical difference block of each of the plurality of sub-blocks;
> determining second encoding complexity of the to-be-encoded picture block based on the horizontal difference block and the vertical difference block of each sub-block; and
> determining the encoding complexity of the to-be-encoded picture block based on the first encoding complexity and the second encoding complexity.

4. The method according to claim 2, wherein the determining the encoding complexity of the to-be-encoded picture block based on the target parameter comprises:
determining the encoding complexity of the to-be-encoded picture block based on a target absolute difference, a target sum of absolute transformed differences, or a target quantity of lossless coding bits, wherein the target absolute difference is a smallest absolute difference in absolute differences that are of the to-be-encoded picture block and that correspond to all prediction modes, the sum of absolute transformed differences is a smallest sum of absolute transformed differences in sums of absolute transformed differences that are of the to-be-encoded picture block and that correspond to all prediction modes, and the target quantity of lossless coding bits is a smallest quantity of lossless coding bits in quantities of lossless coding bits that are of the to-be-encoded picture block and that correspond to all prediction modes.

5. The method according to claim 1, wherein the determining encoding complexity of the to-be-encoded picture block based on a plurality of prediction modes comprises:

> dividing the to-be-encoded picture block into a plurality of sub-blocks;
> performing a prediction operation on the plurality of sub-blocks based on the plurality of prediction modes to obtain a prediction residual that is of each sub-block and that corresponds to each prediction mode;
> determining, based on the prediction residual, a target parameter that is of each sub-block and that corresponds to each prediction mode, wherein the target parameter comprises at least one of a sum of absolute differences, a sum of absolute transformed differences, or a quantity of lossless coding bits; and
> determining the encoding complexity of the to-be-encoded picture block based on the target parameter.

6. The method according to claim 5, wherein the determining the encoding complexity of the to-be-encoded picture block based on the target parameter comprises:

> determining encoding complexity of each sub-block based on the target parameter; and
> determining the encoding complexity of the to-be-encoded picture block based on the encoding complexity of each sub-block.

7. The method according to claim 5, wherein the determining the encoding complexity of the to-be-encoded picture block based on the target parameter comprises:

> determining first encoding complexity of the to-be-encoded picture block based on the target parameter;
> determining a horizontal difference block and a vertical difference block of each of the plurality of sub-blocks;
> determining second encoding complexity of the to-be-encoded picture block based on the horizontal difference block and the vertical difference block of each sub-block; and
> determining the encoding complexity of the to-be-encoded picture block based on the first encoding complexity and the second encoding complexity.

8. The method according to any one of claims 1 to 7, wherein the method further comprises:
encoding the encoding complexity into the bitstream.

9. A decoding method, comprising:

> obtaining encoding complexity of a to-be-encoded picture block, wherein the encoding complexity indicates encoding difficulty of the to-be-encoded picture block, the encoding complexity is determined by a plurality of prediction modes, and the plurality of prediction modes comprise at least one of block-level prediction, point-level prediction, and intra block copy prediction;

determining a quantization parameter of the to-be-encoded picture block based on the encoding complexity; and

decoding a bitstream based on the quantization parameter to obtain a decoded picture block, wherein the bitstream is generated by encoding the to-be-encoded picture block, and the decoded picture block is a reconstructed to-be-encoded picture block.

10. The method according to claim 9, wherein the obtaining encoding complexity comprises:
performing entropy decoding on the bitstream to obtain the encoding complexity.

11. The method according to claim 9, wherein the obtaining encoding complexity of a to-be-encoded picture block comprises:

performing a prediction operation on the to-be-encoded picture block based on the plurality of prediction modes to obtain a prediction residual that is of the to-be-encoded picture block and that corresponds to each prediction mode;

determining, based on the prediction residual, a target parameter that is of the to-be-encoded picture block and that corresponds to each prediction mode, wherein the target parameter comprises at least one of a sum of absolute differences, a sum of absolute transformed differences, or a quantity of lossless coding bits; and

determining the encoding complexity of the to-be-encoded picture block based on the target parameter.

12. The method according to claim 11, wherein the determining the encoding complexity of the to-be-encoded picture block based on the target parameter comprises:

determining first encoding complexity of the to-be-encoded picture block based on the target parameter;

dividing the to-be-encoded picture block into a plurality of sub-blocks;

determining a horizontal difference block and a vertical difference block of each of the plurality of sub-blocks;

determining second encoding complexity of the to-be-encoded picture block based on the horizontal difference block and the vertical difference block of each sub-block; and

determining the encoding complexity of the to-be-encoded picture block based on the first encoding complexity and the second encoding complexity.

13. The method according to claim 11, wherein the determining the encoding complexity of the to-be-encoded picture block based on the target parameter comprises:

determining the encoding complexity of the to-be-encoded picture block based on a target absolute difference, a target sum of absolute transformed differences, or a target quantity of lossless coding bits, wherein the target absolute difference is a smallest absolute difference in absolute differences that are of the to-be-encoded picture block and that correspond to all prediction modes, the sum of absolute transformed differences is a smallest sum of absolute transformed differences in sums of absolute transformed differences that are of the to-be-encoded picture block and that correspond to all prediction modes, and the target quantity of lossless coding bits is a smallest quantity of lossless coding bits in quantities of lossless coding bits that are of the to-be-encoded picture block and that correspond to all prediction modes.

14. The method according to claim 9, wherein the obtaining encoding complexity of a to-be-encoded picture block comprises:

dividing the to-be-encoded picture block into a plurality of sub-blocks;

performing a prediction operation on the plurality of sub-blocks based on the plurality of prediction modes to obtain a prediction residual that is of each sub-block and that corresponds to each prediction mode;

determining, based on the prediction residual, a target parameter that is of each sub-block and that corresponds to each prediction mode, wherein the target parameter comprises at least one of a sum of absolute differences, a sum of absolute transformed differences, or a quantity of lossless coding bits; and

determining the encoding complexity of the to-be-encoded picture block based on the target parameter.

15. The method according to claim 14, wherein the determining the encoding complexity of the to-be-encoded picture block based on the target parameter comprises:

determining encoding complexity of each sub-block based on the target parameter; and

determining the encoding complexity of the to-be-encoded picture block based on the encoding complexity of each sub-block.

16. The method according to claim 14, wherein the determining the encoding complexity of the to-be-encoded picture block based on the target parameter comprises:

determining first encoding complexity of the to-be-encoded picture block based on the target parameter;
determining a horizontal difference block and a vertical difference block of each of the plurality of sub-blocks;
determining second encoding complexity of the to-be-encoded picture block based on the horizontal difference block and the vertical difference block of each sub-block; and
determining the encoding complexity of the to-be-encoded picture block based on the first encoding complexity and the second encoding complexity.

17. An encoding apparatus, comprising an obtaining unit, a first determining unit, a second determining unit, and an encoding unit, wherein

the obtaining unit is configured to obtain a to-be-encoded picture block;
the first determining unit is configured to determine encoding complexity of the to-be-encoded picture block based on a plurality of prediction modes, wherein the plurality of prediction modes comprise at least one of block-level prediction, point-level prediction, and intra block copy prediction, and the encoding complexity indicates encoding difficulty of the to-be-encoded picture block;
the second determining unit is configured to determine a quantization parameter of the to-be-encoded picture block based on the encoding complexity; and
the encoding unit is configured to encode the to-be-encoded picture block based on the quantization parameter to generate a bitstream.

18. The apparatus according to claim 17, wherein the first determining unit is specifically configured to:

perform a prediction operation on the to-be-encoded picture block based on the plurality of prediction modes to obtain a prediction residual that is of the to-be-encoded picture block and that corresponds to each prediction mode;
determine, based on the prediction residual, a target parameter that is of the to-be-encoded picture block and that corresponds to each prediction mode, wherein the target parameter comprises at least one of a sum of absolute differences, a sum of absolute transformed differences, or a quantity of lossless coding bits; and
determine the encoding complexity of the to-be-encoded picture block based on the target parameter.

19. The apparatus according to claim 18, wherein the first determining unit is specifically configured to:

determine first encoding complexity of the to-be-encoded picture block based on the target parameter;
divide the to-be-encoded picture block into a plurality of sub-blocks;
determine a horizontal difference block and a vertical difference block of each of the plurality of sub-blocks;
determine second encoding complexity of the to-be-encoded picture block based on the horizontal difference block and the vertical difference block of each sub-block; and
determine the encoding complexity of the to-be-encoded picture block based on the first encoding complexity and the second encoding complexity.

20. The apparatus according to claim 18, wherein the first determining unit is specifically configured to:
determine the encoding complexity of the to-be-encoded picture block based on a target absolute difference, a target sum of absolute transformed differences, or a target quantity of lossless coding bits, wherein the target absolute difference is a smallest absolute difference in absolute differences that are of the to-be-encoded picture block and that correspond to all prediction modes, the sum of absolute transformed differences is a smallest sum of absolute transformed differences in sums of absolute transformed differences that are of the to-be-encoded picture block and that correspond to all prediction modes, and the target quantity of lossless coding bits is a smallest quantity of lossless coding bits in quantities of lossless coding bits that are of the to-be-encoded picture block and that correspond to all prediction modes.

21. The apparatus according to claim 17, wherein the first determining unit is specifically configured to:

divide the to-be-encoded picture block into a plurality of sub-blocks;

perform a prediction operation on the plurality of sub-blocks based on the plurality of prediction modes to obtain a prediction residual that is of each sub-block and that corresponds to each prediction mode;

determine, based on the prediction residual, a target parameter that is of each sub-block and that corresponds to each prediction mode, wherein the target parameter comprises at least one of a sum of absolute differences, a sum of absolute transformed differences, or a quantity of lossless coding bits; and

determine the encoding complexity of the to-be-encoded picture block based on the target parameter.

22. The apparatus according to claim 21, wherein the first determining unit is specifically configured to:

determine encoding complexity of each sub-block based on the target parameter; and
determine the encoding complexity of the to-be-encoded picture block based on the encoding complexity of each sub-block.

23. The apparatus according to claim 21, wherein the first determining unit is specifically configured to:

determine first encoding complexity of the to-be-encoded picture block based on the target parameter;
determine a horizontal difference block and a vertical difference block of each of the plurality of sub-blocks;
determine second encoding complexity of the to-be-encoded picture block based on the horizontal difference block and the vertical difference block of each sub-block; and
determine the encoding complexity of the to-be-encoded picture block based on the first encoding complexity and the second encoding complexity.

24. The apparatus according to any one of claims 17 to 23, wherein the encoding unit is further configured to:
encode the encoding complexity into the bitstream.

25. A decoding apparatus, comprising an obtaining unit, a determining unit, and a decoding unit, wherein

the obtaining unit is configured to obtain encoding complexity of a to-be-encoded picture block, wherein the encoding complexity indicates encoding difficulty of the to-be-encoded picture block, the encoding complexity is determined by a plurality of prediction modes, and the plurality of prediction modes comprise at least one of block-level prediction, point-level prediction, and intra block copy prediction;
the determining unit is configured to determine a quantization parameter of the to-be-encoded picture block based on the encoding complexity; and
the decoding unit is configured to decode a bitstream based on the quantization parameter to obtain a decoded picture block, wherein the bitstream is generated by encoding the to-be-encoded picture block, and the decoded picture block is a reconstructed to-be-encoded picture block.

26. The decoding apparatus according to claim 25, wherein the obtaining unit is specifically configured to:
perform entropy decoding on the bitstream to obtain the encoding complexity.

27. The decoding apparatus according to claim 25, wherein the obtaining unit is specifically configured to:

perform a prediction operation on the to-be-encoded picture block based on the plurality of prediction modes to obtain a prediction residual that is of the to-be-encoded picture block and that corresponds to each prediction mode;
determine, based on the prediction residual, a target parameter that is of the to-be-encoded picture block and that corresponds to each prediction mode, wherein the target parameter comprises at least one of a sum of absolute differences, a sum of absolute transformed differences, or a quantity of lossless coding bits; and
determine the encoding complexity of the to-be-encoded picture block based on the target parameter.

28. The decoding apparatus according to claim 27, wherein the obtaining unit is specifically configured to:

determine first encoding complexity of the to-be-encoded picture block based on the target parameter;
divide the to-be-encoded picture block into a plurality of sub-blocks;
determine a horizontal difference block and a vertical difference block of each of the plurality of sub-blocks;
determine second encoding complexity of the to-be-encoded picture block based on the horizontal difference block and the vertical difference block of each sub-block; and
determine the encoding complexity of the to-be-encoded picture block based on the first encoding complexity and the second encoding complexity.

29. The decoding apparatus according to claim 27, wherein the obtaining unit is specifically configured to:
determine the encoding complexity of the to-be-encoded picture block based on a target absolute difference, a target sum of absolute transformed differences, or a target quantity of lossless coding bits, wherein the target absolute difference is a smallest absolute difference in absolute differences that are of the to-be-encoded picture block and that correspond to all prediction modes, the sum of absolute transformed differences is a smallest sum of absolute transformed differences in sums of absolute transformed differences that are of the to-be-encoded picture block and that correspond to all prediction modes, and the target quantity of lossless coding bits is a smallest quantity of lossless coding bits in quantities of lossless coding bits that are of the to-be-encoded picture block and that correspond to all prediction modes.

30. The decoding apparatus according to claim 25, wherein the obtaining unit is specifically configured to:

divide the to-be-encoded picture block into a plurality of sub-blocks;
perform a prediction operation on the plurality of sub-blocks based on the plurality of prediction modes to obtain a prediction residual that is of each sub-block and that corresponds to each prediction mode;
determine, based on the prediction residual, a target parameter that is of each sub-block and that corresponds to each prediction mode, wherein the target parameter comprises at least one of a sum of absolute differences, a sum of absolute transformed differences, or a quantity of lossless coding bits; and
determine the encoding complexity of the to-be-encoded picture block based on the target parameter.

31. The decoding apparatus according to claim 30, wherein the obtaining unit is specifically configured to:

determine encoding complexity of each sub-block based on the target parameter; and
determine the encoding complexity of the to-be-encoded picture block based on the encoding complexity of each sub-block.

32. The decoding apparatus according to claim 30, wherein the obtaining unit is specifically configured to:

determine first encoding complexity of the to-be-encoded picture block based on the target parameter;
determine a horizontal difference block and a vertical difference block of each of the plurality of sub-blocks;
determine second encoding complexity of the to-be-encoded picture block based on the horizontal difference block and the vertical difference block of each sub-block; and
determine the encoding complexity of the to-be-encoded picture block based on the first encoding complexity and the second encoding complexity.

33. A decoding apparatus, comprising at least one processor and a memory, wherein the at least one processor executes a program or instructions stored in the memory, to enable the decoding apparatus to implement the method according to any one of claims 1 to 8.

34. An encoding apparatus, comprising at least one processor and a memory, wherein the at least one processor executes a program or instructions stored in the memory, to enable the encoding apparatus to implement the method according to any one of claims 9 to 16.

35. A computer-readable storage medium, configured to store a computer program, wherein when the computer program is run on a computer or a processor, the computer or the processor is enabled to implement the method according to any one of claims 1 to 8 or any one of claims 9 to 16.

36. A computer program product, wherein the computer program product comprises instructions, and when the instructions are run on a computer or a processor, the computer or the processor is enabled to implement the method according to any one of claims 1 to 8 or any one of claims 9 to 16.

<u>10</u>

FIG. 1a

FIG. 1b

FIG. 2

EP 4 583 507 A1

FIG. 3

FIG. 4

FIG. 5

600

602

Processor

618

Display

612

| Data | 606 |
| Application: 1... | |
| Application: video coding | 610 |
| Application: ...N | |
| Operating system | 608 |

604

FIG. 6

| Obtain a to-be-encoded picture block | S701 |

| Determine encoding complexity of the to-be-encoded picture block based on a plurality of prediction modes | S702 |

| Determine a quantization parameter of the to-be-encoded picture block based on the encoding complexity of a to-be-encoded picture | S703 |

| Encode the to-be-encoded picture block based on the quantization parameter of the to-be-encoded picture block to generate a bitstream | S704 |

FIG. 7

FIG. 8

FIG. 9

FIG. 10

FIG. 11

Obtain encoding complexity of a to-be-encoded picture block      S1201

Determine a quantization parameter of the to-be-encoded picture block based on the encoding complexity of the to-be-encoded picture block      S1202

Decode a bitstream based on the quantization parameter of the to-be-encoded picture block to obtain a decoded picture block, where the bitstream is generated by encoding the to-be-encoded picture block, and the decoded picture block is a reconstructed to-be-encoded picture block      S1203

FIG. 12

Encoding apparatus 1300

Obtaining unit 1301

First determining unit 1302

Second determining unit 1303

Encoding unit 1304

FIG. 13

Decoding apparatus 1400

Obtaining unit 1401

Determining unit 1402

Decoding unit 1403

FIG. 14

Chip 1500

Processor 1501

Bus 1503

Interface circuit 1502

FIG. 15

## INTERNATIONAL SEARCH REPORT

| International application No. |
|---|
| **PCT/CN2023/128410** |

### A. CLASSIFICATION OF SUBJECT MATTER

H04N19/107(2014.01)i

According to International Patent Classification (IPC) or to both national classification and IPC

### B. FIELDS SEARCHED

Minimum documentation searched (classification system followed by classification symbols)

IPC: H04N19

Documentation searched other than minimum documentation to the extent that such documents are included in the fields searched

Electronic data base consulted during the international search (name of data base and, where practicable, search terms used)

CNTXT, ENTXTC, ENTXT, DWPI, CJFD, CNKI, JCT-VC: 编码, 复杂度, 难度, 预测模式, 预测方式, 预测方法, 块级预测, 点级预测, 帧内块复制预测, 量化, code, encode, complexity, predict, prediction, mode, way, method, block, point, intra block copy, IBC, quantify, quantization

### C. DOCUMENTS CONSIDERED TO BE RELEVANT

| Category* | Citation of document, with indication, where appropriate, of the relevant passages | Relevant to claim No. |
|---|---|---|
| X | CN 103888762 A (SOUTHWEST JIAOTONG UNIVERSITY) 25 June 2014 (2014-06-25) description, paragraphs 0025-0091, and figure 1 | 1, 8-10, 17, 24-26, 33-36 |
| A | CN 113382258 A (BEIJING BAIDU NETCOM SCIENCE & TECHNOLOGY CO., LTD.) 10 September 2021 (2021-09-10) entire document | 1-36 |
| A | CN 111836046 A (TENCENT TECHNOLOGY (SHENZHEN) CO., LTD.) 27 October 2020 (2020-10-27) entire document | 1-36 |
| A | JP 2017152851 A (FUJITSU LIMITED) 31 August 2017 (2017-08-31) entire document | 1-36 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **31 January 2024** | **01 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/128410**

| Patent document cited in search report | | | Publication date (day/month/year) | Patent family member(s) | Publication date (day/month/year) |
|---|---|---|---|---|---|
| CN | 103888762 | A | 25 June 2014 | None | |
| CN | 113382258 | A | 10 September 2021 | None | |
| CN | 111836046 | A | 27 October 2020 | None | |
| JP | 2017152851 | A | 31 August 2017 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211373846